# EUROPÄISCHE PATENTSCHRIFT

(11) **EP 1 982 082 B1**
(45) Veröffentlichungstag und Bekanntmachung des Hinweises auf die Patenterteilung: **11.04.2012**
(21) Anmeldenummer: 07704348.7
(22) Anmeldetag: 05.02.2007
(51) Int. Cl.: F16B 37/08

(54) **SCHRAUBENMUTTER MIT MINDESTENS ZWEI TEILEN**
NUT HAVING AT LEAST TWO PARTS
ECROU FILETE EN AU MOINS DEUX PARTIES

(30) Priorität: 08.02.2006 DE 102006005998
(43) Veröffentlichungstag der Anmeldung: 22.10.2008
(73) Patentinhaber: Schnier, Dietmar, 30826 Garbsen (DE)
(72) Erfinder: Schnier, Dietmar, 30826 Garbsen (DE)
(74) Vertreter: Patentanwälte Freischem
(86) Internationale Anmeldenummer: PCT/EP2007/051064
(87) Internationale Veröffentlichungsnummer: WO 2007/090805

(56) Entgegenhaltungen:
- DE-A1- 10 015 207
- DE-B- 1 144 542
- US-A- 4 078 470
- US-A- 4 556 352

## Beschreibung

Die Erfindung betrifft eine Schraubenmutter mit einem Innengewinde und mindestens zwei Teilen gemäß dem Oberbegriff des Patentanspruchs 1.

Schraubenmuttern weisen üblicherweise geschlossene Innengewinde auf, so daß sie auf das Ende eines Außengewindes aufschraubbar sind. Das Außengewinde wird beispielsweise durch einen Gewindebolzen, durch den Schaft einer Schraube, durch eine Gewindespindel oder eine Gewindestange gebildet. In einigen Fällen ist es schwierig oder unmöglich, eine Schraubenmutter vom freien Ende auf ein Außengewinde aufzuschrauben. Aus diesem Grund werden seit langer Zeit Schraubenmuttern vorgeschlagen, welche Teile aufweisen, die in radialer Richtung auf ein Außengewinde aufschiebbar sind.

So wurde bereits im Jahr 1921 in der Druckschrift US 1,375,781 vorgeschlagen, eine einteilige Schraubenmutter mit einem halben Innengewinde in radialer Richtung auf einen Gewindebolzen aufzuschieben. Eine ähnliche einteilige Schraubenmutter ist aus der Druckschrift DE 39 22 957 C1 bekannt. Eine ähnliche Schraubenmutter ist ferner der deutschen Gebrauchsmusterschrift DE 71 46 313 zu entnehmen, wobei hier die Öffnung des Gewindeabschnitts etwas kleiner als der Durchmesser des Außengewindes ist, so daß sich die Schraubenmutter beim Aufschieben auf das Außengewinde um ein gewisses Maß elastisch aufbiegt.

Zweiteilige Schraubenmuttern sind beispielsweise aus der Druckschrift US 4,556,352 bekannt. Die zwei Teile der Schraubenmutter weisen miteinander zusammenwirkende Rastvorsprünge auf, welche die Teile der Schraubenmutter in der Verwendungsposition, in der das Innengewinde mit geringem Spiel das Außengewinde umgibt, fixieren. Zusätzlich sind Arretierungsstifte vorgesehen, welche die Teile der Schraubenmutter formschlüssig miteinander verbinden. Sowohl die Herstellung dieser Schraubenmutter als auch ihre Handhabung, insbesondere das Anbringen der Arretierungsstifte, ist aufwendig.

In der Druckschrift US 6,821,070 B1 wird eine Schraubenmutter mit zwei zueinander verschwenkbaren Teilen, die je die Hälfte eines Innengewindes aufweisen, beschrieben. Die Verschwenkung erfolgt um eine parallel zur Achse des Innengewindes verlaufende Schwenkachse. Ein drittes, um diese Achse verschwenkbares Teil ist vorgesehen, welches zusätzlich in Richtung der Achse des Innengewindes verschiebbar ist. Bei dieser Verschiebung hintergreift es einen Haltevorsprung am ersten Teil, so daß die Schwenkbewegung blockiert ist. Dadurch wird der zweite Teil mit Innengewindeabschnitt in seiner Verwendungsposition fixieren. Auch diese Konstruktion ist in Herstellung und Handhabung äußerst aufwendig.

Die Druckschrift US 4,462,731 beschreibt eine Schraubenmutter aus zwei Teilen mit Innengewindeabschnitten, auf welche ein starrer Mantel aufgesteckt wird, um diese Teile zueinander zu fixieren. Der Mantel besteht ebenfalls aus zwei Mantelteilen, welche mit Ausnehmungen der Teile mit Innengewindeabschnitten zusammenwirken, um eine formschlüssige Verbindung zu erzielen. Auch diese Anordnung ist aufwendig in der Herstellung und kompliziert in der Handhabung.

Die Druckschrift US 4,826,376 beschreibt eine zweiteilige Schraubenmutter, bei der die Teile in einer radial zur Achse des Innengewindes verlaufenden Ebene geteilt sind. Die Teile sind ferner zueinander verdrehbar. In einer ersten Drehstellung fluchten die sich an die Innengewindeabschnitte der Teile anschließenden Öffnungen miteinander, und die Innengewindeabschnitte der Teile liegen unmittelbar übereinander. In dieser Stellung können die Teile auf ein Außengewinde aufgeschoben werden. Anschließend können die Teile zueinander um 180° verdreht werden, so daß nun die Innengewindeabschnitte sowie die sich daran anschließenden Öffnungen der beiden Teile jeweils einander gegenüberliegen. Das Außengewinde wird dann von beiden Seiten in zwei unterschiedlichen Ebenen umfaßt. Auch diese Anordnung ist in der Herstellung aufwendig.

Aus der Druckschrift US 4,078,470 ist eine geteilte Schraubenmutter bekannt, die entlang vertikaler Ebenen in zwei sich ergänzende Hälften geteilt ist, wobei etwa in der Mitte der Höhe der Mutternteile Zwischenflächen vorgesehen ist, die sich entlang einer flachen Ebene in einem spitzen Winkel zu der Horizontalen erstreckt, um eine Verriegelung gegen direkte horizontale Trennung zu schaffen. Zum Trennen voneinander können die Mutternteile nur in einer Richtung parallel zur Ebene der Zwischenflächen verschoben werden. Allerdings besteht hier das Problem, daß durch die Steigung der Gewindeflanken beim Festschrauben der Mutternteile eine radial zum Gewinde wirkende Kraftkomponente entsteht. Diese Kraftkomponente drückt die zwei Mutternteile in radialer Richtung voneinander weg. Die radiale Bewegung der Mutternteile wird nicht vollständig vermieden sondern lediglich in eine schräg verlaufende Bewegung entlang der Ebene der Zwischenflächen umgelenkt. Es besteht die Gefahr, daß die durch das Außengewinde erzeugte radial nach außen wirkende Kraft den Widerstand durch die Schrägstellung der Zwischenflächen überwindet. Aus diesem Grund wird in der Druckschrift US 4,078,470 vorgeschlagen, Sicherungselemente wie einen Sicherungsring oder einen Sicherungssplint einzusetzen, um zu Vermeiden, daß sich die Mutternteile in radialer Richtung voneinander entfernen. Diese Anordnung ist entweder unsicher, weil sich die Mutternteile lösen können, oder durch die Herstellung der zusätzlichen Sicherungselemente aufwendig und kompliziert in der Handhabung.

Die Druckschrift US 2,257,327 beschreibt eine Mutter, deren Mutternteile um einen Gewindestift (hinge pin 11), der sich auf jeder Seite des Gewindes oder oberhalb des Gewindes erstreckt, schwenkbar aneinander angelenkt sind. Der Gelenkstift schränkt die Bewegbarkeit der Mutternteile zueinander ein und verhindert, daß die Mutternteile vollständig voneinander gelöst werden können.

Die Druckschrift DE-A-1 144 542 beschreibt eine Schraubenmutter mit den Merkmalen des Oberbegriffs des Patentanspruchs 1. Zwei Mutternteile sind in einer in Richtung der Gewindeachse verlaufenden Teilungsebene geteilt. Mindestens ein Teil weist mindestens einen Ansatz auf, der in eine Aussparung des anderen Mutternteils einfügbar ist. Die Ansätze und die entsprechenden Aussparungen der Mutternteile sind kreisbogenförmig ausgebildet, so daß die Mutternteile in einer Rotationsbewegung um eine quer zur Achse des Innengewindes verlaufende Rotationsachse geführt werden, wenn der kreisförmige Ansatz in die kreisförmige Aussparung geschoben wird. Diese Mutternteile sind schwer zu fertigen, weil die Aussparungen und Ansätze viele Hinterschneidungen aufweisen. Außerdem sind sie schwer zu handhaben, weil die Aussparungen und Ansätze zum Zusammenfügen genau aufeinander ausgerichtet werden müssen. Schließlich haben die Ansätze und die damit zusammenwirkenden Wände der Aussparungen nur eine sehr geringe Materialstärke und folglich eine geringe Festigkeit.

Aufgabe der Erfindung ist es, eine Schraubenmutter der eingangs genannten Art zu schaffen, welche einfach herzustellen und zu handhaben ist.

Diese Aufgabe wird für eine Schraubenmutter des Oberbegriffs des Anspruchs 1 erfindungsgemäß durch die Merkmale des kennzeichnenden Teils des Anspruchs 1 gelöst. Weitere vorteilhafte Ausführungsformen ergeben sich aus den Unteransprüchen.

Mit anderen Worten sind an den Teilen der Schraubenmutter miteinander zusammenwirkende Verbindungselemente mit Führungsflächen angeordnet, welche in der Verwendungsposition der Teile derartzusammenwirken, daß eine radiale Verschiebung der Teile, die aus der Verwendungsposition heraus und von dem Außengewinde fort gerichtet ist, blockiert ist. Um in die blockierende Verwendungsposition zu gelangen, werden die Teile der Schraubenmutter nicht nur in radialer Richtung verschoben, sondern um eine quer zur Achse des Innengewindes verlaufende Rotationsachse rotiert bzw. verschwenkt. Diese Rotationsbewegung ist nur bei gelöster Schraubverbindung möglich. Bei angezogener Schraubverbindung stützt sich die Schraubenmutter mit einer Anlagefläche oder mehreren Anlagepunkten auf einer gegenüberliegenden Stützfläche ab, die in axialer Richtung unverschiebbar mit dem Außengewinde verbunden ist. Mindestens ein Mutternteil weist mindestens einen Verriegelungsarm auf. Der Verriegelungsarm hat zwei Seiten, die in bezug auf die Gewindeachsen in entgegengesetzte Richtungen orientiert sind. Diese Seiten können auch als Oberseite und Unterseite bezeichnet werden, wenn davon ausgegangen wird, daß die Gewindeachse von oben nach unten verläuft. Nur eine dieser zwei Seiten des Verriegelungsarms weist eine die Rotationsbewegung bewirkende Führungsfläche auf, welche gegen eine komplementäre und entgegengesetzt orientierte Führungsfläche des anderen Teils anliegt. Die andere Seite des Verriegelungsarms kann in der Praxis die Außenseite des Mutternteils (Oberseite oder Unterseite) bilden und als Anlage gegen die Stützfläche dienen, gegen die die Schraubenmutter geschraubt wird.

Der Verriegelungsarm mit der Führungsfläche am ersten Mutternteil sowie der damit zusammenwirkende Materialabschnitt des zweiten Mutternteils können große Materialstärken aufweisen. Es ist möglich, daß die Materialstärke dieser Materialabschnitte jeweils der Hälfte gesamten Dicke der Mutter entspricht. Hierdurch läßt sich eine hohe Stabilität und Belastbarkeit dieser Materialabschnitte und damit der Mutter insgesamt erzielen. Ferner kann sich die Führungsfläche des Verriegelungsarms sowie die damit zusammenwirkende Führungsfläche über die gesamte Länge der Mutter erstrecken. Hierdurch ergibt sich eine große tragende Fläche und daher eine hohe Belastbarkeit.

Wenn die Anlagefläche der Schraubenmutter, welche in der Regel von ihrer Unterseite gebildet wird, im verschraubten Zustand gegen die Stützfläche gepreßt wird, ist das Verschwenken der Mutternteile blockiert und die Mutter kann nur durch Losschrauben von dem Außengewinde der Schraube oder Gewindestange gelöst werden. Wenn dagegen die Schraubenmutter nach dem Losschrauben um einige Umdrehungen einen gewissen Abstand zur Stützfläche aufweist, ist das Rotieren oder Verschwenken der Mutternteile möglich, die anschließend voneinander in radialer Richtung des Gewindes getrennt werden können.

Es sei darauf hingewiesen, daß die quer zur Achse des Innengewindes verlaufende Rotationsachse nicht notwendigerweise rechtwinklig zur Achse des Innengewindes verlaufen muß. Sie kann auch schräg oder windschief in bezug auf die Achse des Innengewindes verlaufen. In der Praxis wird die Rotationsachse aber meist in etwa radial zur Innengewindeachse liegen.

Anders ausgedrückt, weist die Anlagefläche der Schraubenmutter einen oder mehrere Gewindegänge Abstand zur gegenüberliegenden Stützfläche auf, wenn die Schraubenmutter auf das Außengewinde aufgeschoben und aufgeschwenkt wurde. Durch Verschrauben der Schraubenmutter um die der Anzahl der Gewindegänge entsprechende Umdrehungszahl wird die Anlagefläche der Schraubenmutter gegen die gegenüberliegende Stützfläche gedrückt, wodurch ein erneutes Verschwenken der Teile der Schraubenmutter und ein Lösen der Teile voneinander blockiert ist. Das Zusammenfügen der Mutternteile ist dadurch erleichtert, daß nur auf einer Seite des Verriegelungsarms eine die Rotationsbewegung der Mutternteile bewirkende Führungsfläche angeordnet ist. Die gegenüberliegende Seite des Verriegelungsarms, das heißt die in bezug auf die Gewindeachse zur Führungsfläche entgegengesetzt orientierte Seite des Verriegelungsarms bildet eine Außenfläche der Schraubenmutter an deren Oberseite oder Unterseite und kann beim Festschrauben gegen eine Stützfläche anliegen. Da der Verriegelungsarm nur auf einer Seite mit einer gegenüberliegenden Stützfläche zur Erzielung der Rotationsbewegung zusammenwirkt, ist seine Dicke nicht kritisch und muß keine bestimmten Fertigungstoleranzen einhalten.

Die Schwenkbewegung oder Rotationsbewegung der Teile um eine Achse quer zur Achse des Innengewindes beim Aufbringen der Mutternteile auf das Außengewinde stellt somit sicher, daß die gegenläufige Bewegung bei festgeschraubten Mutternteilen gesperrt ist. Die aus den Teilen gebildete Schraubenmutter ist dadurch unlösbar auf dem Außengewinde fixiert.

Eine derartige Schraubenmutter umfaßt vorzugsweise zwei Teile. Sie hat gegenüber konventionellen Schraubenmuttern erhebliche Handhabungsvorteile. So muß nicht die gesamte Länge des Außengewindes durch Aufschrauben der Schraubenmutter überwunden werden. Die Schraubenmutter muß beim Aufbringen in ihre Verwendungsposition lediglich radial aufgeschoben und verschwenkt werden und anschließend um wenige Umdrehungen festgezogen werden. Es können auch beide Teile der Schraubenmutter in einer teilweise zusammen geschobenen Stellung fixiert sein, in der sie über das Außengewinde bis zur Wunschposition geschoben werden. Erst hier werden die Teile gegeneinander in die Verwendungsposition gedrückt und anschließend fest mit dem Außengewinde verschraubt.

Auch ist es möglich, eine erfindungsgemäße Schraubenmutter an einem Außengewinde ohne freies Ende anzubringen. So kann die Schraubenmutter beispielsweise auf einen Gewindeabschnitt, der zu beiden Seiten von dickeren Stangenabschnitten ohne Gewinde begrenzt ist, aufgebracht werden. Die erfindungsgemäße Schraubenmutter ermöglicht folglich außergewöhnliche Verbindungsarten, bei leichter Handhabung und kostengünstiger Herstellung.

In der Praxis umfassen die Verbindungselemente der Teile gegeneinander anliegende und die Rotation bewirkende Führungsflächen, die um einen Winkel zur radial zur Achse des Innengewindes verlaufenden Ebene geneigt sind. Dieser Winkel der Führungsflächen zur radialen Ebene des Innengewindes bewirkt, daß die Teile der Schraubenmuttern nicht einfach radial gegeneinander verschoben, sondern zusätzlich um eine Achse im wesentlichen in einer radialen Ebene des Innengewindes verschwenkt werden müssen.

Die Führungsflächen sind in der Praxis vorzugsweise um einen Winkel von weniger als 20° zur radialen Ebene des Innengewindes geneigt. Hierdurch ist die zur Verbindung der Mutternteile erforderliche Schwenkbewegung nicht übermäßig groß und es wird eine Kollision der Konturen Gewindeabschnitte der Mutternteile mit dem Außengewinde während der Schwenkbewegung vermieden. Sollten größere Neigungen gewünscht sein, müßten die kollidierenden Konturen der Gewindeabschnitte abgetragen werden. Die Führungsflächen können aber auch eine variable Neigung zur radialen Ebene aufweisen und beispielsweise zylinderartig gewölbt oder wendelförmig gewunden sein.

Zur Erzielung der Schwenkbewegung können die Führungsflächen auf verschiedene Weisen angeordnet sein. Bei einer Schraubenmutter, bei der die Innengewindeabschnitte der zwei Teile entlang einer sich in Richtung der Gewindeachse erstreckenden Teilungsebene getrennt sind, kann jedes Teil der Schraubenmutter zwei Führungsflächen aufweisen, die zu beiden Seite einer rechtwinklig zur Teilungsebene verlaufenden Mittelebene angeordnet sind. Wenn man die Richtung, in der sich die Führungsflächen erstrecken als Längsrichtung bezeichnet, bildet die Mittelebene die mittlere Längsebene, wobei die zwei Führungsflächen zu beiden Seiten dieser Mittelebene verlaufen. Ferner können die zwei Führungsflächen eines Mutternteils in entgegengesetzte Richtungen in bezug auf die Gewindeachse orientiert sein. Wenn man annimmt, daß die Gewindeachse von oben nach unten verläuft, weist also die Flächennormale der ersten Führungsfläche eines Mutternteils nach oben und die Flächennormale der zweiten Führungsfläche des gleichen Mutternteils nach unten. Das komplementäre Mutternteil ist entsprechend ausgebildet. Zumindest ein Teil der Führungsflächen ist an den Verriegelungsarmen angeordnet. Diese Ausbildung der schrägen Führungsflächen kann bei geeignetem Führungsflächenverlauf zu der Schwenkbewegung führen. Zum Beispiel können die Führungsflächen auf einer um eine in der Mittelebene liegende radiale Achse gewundene Wendelfläche liegen, die eine Schraubbewegung beim Zusammenschieben der zwei Mutternteile vorgibt. Die zwei Führungsflächen können auch auf einer Zylindermantelfläche liegen, deren Zylinderachse in der Teilungsebene liegt. In diesem Fall werden die Mutternteile beim zusammenschieben um die Zylinderachse zueinander verschwenkt.

Alternativ kann eine Schraubenmutter aus zwei Teilen, deren Innengewindeabschnitte entlang einer sich in Richtung der Gewindeachse erstreckenden Teilungsebene getrennt sind, ebene Führungsflächen aufweisen, die nicht gewölbte oder gewunden sind. Um die Schwenkbewegung hervorzurufen, kann jedes Teil der Schraubenmutter zwei Führungsflächen auf beiden Seiten der Teilungsebene aufweisen. Diese Führungsflächen sind auf der ersten Seite der Teilungsebene in entgegengesetzte Richtungen in bezug auf die Gewindeachse orientiert, als die auf der zweiten Seite der Teilungsebene. Mit anderen Worten weisen die Führungsflächen eines Mutternteils auf der ersten Seite der Teilungsebene nach oben und auf der zweiten Seite der Teilungsebene nach unten. Ferner sind die Führungsflächen auf der ersten Seite der Teilungsebene in die entgegengesetzte Richtung zur radialen Ebene des Gewindes geneigt als die auf der zweiten Seite der Teilungsebene. Mit anderen Worten verlaufen die Ebenen, in denen die Führungsflächen liegen, wie ein Spitzdach, dessen Giebel auf der Gewindeachse liegt. So können die Teile ineinander geschoben werden, wobei die Achsen der Innengewindeabschnitte der Teile leicht zueinander verschwenkt sind. In dem letzten Abschnitt der Verschiebebewegung werden die Teile in die Verwendungsposition geschwenkt, und zwar um eine radial zur Gewindeachse verlaufende Schwenkachse, die in der Teilungsebene liegt. In der Verwendungsposition liegen die Achsen der Innengewindeabschnitte der zwei Teile im wesentlichen aufeinander und das aus den zwei Abschnitten bestehende Innengewinde umgreift ein Außengewinde mit entsprechenden Maßen im wesentlichen spielfrei. Dann kann die so gebildete Schraubenmutter festgeschraubt werden.

Wie erwähnt, können die Führungsflächen eine Wölbung in Form eines Zylindermantelabschnitts aufweisen. Die Führungsfläche am ersten Mutternteil ist dabei konvex geformt, und die hiermit zusammenwirkende Führungsfläche am zweiten Mutternteil ist konkav gemäß der gleichen Zylindermantelfläche geformt. So kann durch die Führungsfläche die Annäherungsbewegung der zwei Mutternteile über eine längere Bewegungsbahn entlang der genannten Zylindermantelfläche geführt werden.

In der Praxis kann die Achse des Innengewindes mit einem Radius des Zylinders, auf dessen Mantelfläche die Führungsflächen verlaufen, zusammenfallen. Auch kann die Teilung der Mutternteile in einer den Zylinder diametral schneidenden Ebene liegen. Die Rotation der Mutternteile bei der Bewegung in die Verwendungsposition erfolgt dann durch Verschieben der zylindermantelförmigen Führungsflächen zueinander im wesentlichen um die in der Teilungsebene der Mutternteile liegende Achse des Zylindermantels.

Wie ebenfalls weiter oben erwähnt, können in einer weiteren praktischen Ausführungsform die Führungsflächen auf einer gewundenen Fläche liegen. Die Windung verläuft zum Beispiel um eine Achse, die rechtwinklig zur Ebene der Teilung der Mutter und radial zur Achse des Innengewindes verläuft und die Gewindeachse etwa in der Mitte des Innengewindes schneidet. In diesem Fall werden die Mutternteile beim Zusammenfügen nicht um eine in der Teilungsebene liegende Achse gedreht sondern um die senkrecht zur Teilungsebene der Mutter verlaufende Achse entlang einer Schraubenbewegung gedreht.

In der Praxis kann das Material der Schraubenmutter, meist Stahl aber je nach Anwendung auch Kunststoff, elastisch verformbar sein. Die Form zweier gegeneinander anliegender Führungsflächen der Mutternteile kann geringfügig voneinander abweichen. Die Flächen können leicht unterschiedlich gewölbt oder zueinander geneigt sein. Beide Merkmale führen dazu, daß bei Erhöhung des in Richtung der Achse des Innengewindes wirkenden Drucks durch Festschrauben der Muttern eine gewisse Verformung der Mutternteile erfolgt, bis die Führungsflächen flächig gegeneinander anliegen. Die Führungsflächen der Schraubenmutternteile übernehmen dabei die Funktion einer Unterlegscheibe oder Federscheibe und sichern zusätzlich die Schraubverbindung gegen Lösen aufgrund dynamischer Lastwechsel. Gleiches gilt, wenn die Unterseite der Mutternteile nur mit einem oder zwei Anlagepunkten auf der darunter liegenden Stützfläche aufliegt. Die Stützfläche ist die in axialer Richtung zum Außengewinde fixierte Fläche, gegen die sich die Schraubenmutter beim Festschrauben abstützt. Wenn diese Abstützung nur durch ein oder zwei Anlagepunkte pro Mutternteil erfolgt, wird beim Festschrauben ein Drehmoment erzeugt, das die Mutternteile elastisch ein wenig verformt und dabei verkantet. Die Mutter steht also wie bei Verwendung einer Unterlegscheibe unter elastischer Spannung, welche bei einer dynamischen Belastung der Verschraubung dafür sorgt, daß die Verschraubung aufgrund der Spannung selbsthemmend blockiert ist.

Zusätzlich können die Verbindungselemente der Mutternteile gegeneinander anliegende Führungsflächen aufweisen, die in einer sich parallel zur Achse des Innengewindes erstreckenden Ebene liegen. Diese sich parallel zur Achse des Innengewindes erstreckende Ebene definiert vorzugsweise die Richtung der radialen Verschiebung der zwei Schraubenmutternteile zueinander. Die zusätzlichen Führungsflächen bewirken also die Führung der Mutternteile in radialer Richtung des Gewindes, nicht aber die Rotationsbewegung. Ferner bilden zusätzliche Führungsflächen in einer axialen Ebene (auch vertikale Ebene genannt) die in der Verwendungsposition wirksamen Anschläge für die Verschiebung der Mutter. Diese zusätzlichen Führungsflächen bewirken wie gesagt kein Verschwenken der Schraubenmutternteile zum Erreichen der Verwendungsposition und wirken folglich auch nicht bei der Verriegelung der Schraubenmutternteile aneinander mit.

Wie erwähnt, bewirken die Verbindungselemente, welche ein Verschwenken der Schraubenmutternteile zum Erreichen ihrer Verwendungsposition notwendig machen, daß die Schraubenmutter beim Festschrauben an diesem Verschwenken dadurch gehindert ist, daß ihre Anlagefläche gegen eine mit dem Außengewinde verbundene Stützfläche anliegt. Dabei muß die Anlagefläche der Schraubenmutter nicht vollflächig ausgebildet sein. Es ist ausreichend, wenn jedes Teil der Schraubenmutter mindestens einen, vorzugsweise zwei oder drei Anlagepunkte aufweist, die beim Festschrauben gegen die mit dem Außengewinde in axialer Richtung fest verbundene Stützfläche anliegen. In der Regel wird aber die Schraubenmutter mit einer Anlagefläche gegen die Stützfläche anliegen. Zumindest ein Abschnitt dieser Anlagefläche kann von der Seite des Verriegelungsarms gebildet werden, der der die Rotation bewirkenden Führungsfläche gegenüber liegt.

Die Anlagefläche jedes Teils der Schraubenmutter kann an einem Rand eine Schrägfläche aufweisen, welche den Winkel der Schwenkbewegung des Schraubenmutternteils definiert. Hierzu weist die Schrägfläche zur Anlagefläche einen Winkel auf, der dem Rotationswinkel des entsprechenden Schraubenmutternteils beim Bewegen dieses Teils in seine Verwendungsposition entspricht. Mit anderen Worten können die zwei Schraubenmutternteile durch einen Druck auf ihren Rand um einen Winkel verschwenkt werden, der dem Schwenkwinkel aus der Montageposition in die Verwendungsposition entspricht. In diesem verschwenkten Zustand können die Schraubenmutternteile über die Stützfläche ein wenig ineinander geschoben werden. Im letzten Abschnitt der Bewegung werden die Schraubenmutternteile in ihre Verwendungsposition geschwenkt und anschließend festgeschraubt, wobei sie aufgrund der Anlage der Anlagefläche der Schraubenmutter gegen die Stützfläche arretiert werden.

Ähnlich kann eine Schraubenmutter mit punktförmiger Anlage ausgebildet werden. Ein Anlagepunkt eines Schraubenmutternteils sollte mit wenigstens zwei weiteren Punkten im Randbereich des Schraubenmutternteils eine Schrägfläche definieren, deren Winkel dem Rotationswinkel entspricht, um den das Teil bei der Montage gedreht wird. Wiederum kann durch Drücken auf den Randbereich ein Verschwenken des Schraubenmutternteils in die Montageposition erfolgen. In dieser Position kann das Schraubenmutternteil um ein gewisses Maß in das komplementäre Schraubenmutternteil geschoben werden. Anschließend erfolgt die manuelle Schwenkbewegung, wobei die Gewindeabschnitte beider Schraubenmutternteile sich um das Außengewinde legen und die Verwendungsposition erreicht wird.

In der Praxis kann in mindestens einem Endbereich des Innengewindeabschnitts mindestens eines der Teile die Gewindegänge abgetragen sein, um die Rotation der Teile bei der Schwenkbewegung in die Verwendungsposition zu ermöglichen. Je nach gewählter Bewegungsbahn der Relativbewegung der Mutternteile zueinander vermeidet ein Abtragen der Gewindegänge ein Blockieren der Schließbewegung. Dabei können die Innengewindeabschnitte während der Schwenkbewegung um ein geringes Maß gegen das Außengewinde anschlagen, so daß bei der Schließbewegung in die Verwendungsposition eine elastische Verformung der Mutternteile erforderlich ist. Hierdurch schnappen die Mutternteile um das Außengewinde und sind nur durch einen erhöhten Kraftaufwand, der die genannte elastische Verformung hervorruft wieder von dem Außengewinde lösbar.

Die erfindungsgemäße Schraubenmutter kann selbstverständlich auch ein selbstschneidendes Gewinde aufweisen. Dabei kann die Abtragung im Bereich des Gewindes so gewählt werden kann, daß das Gewinde wie ein Gewindeschneider die Gewindegänge des Außengewindes schneidet. Damit könnte die Schraubenmutter noch besser an nachgiebigen Materialien ohne Gewinde, wie Kunststoffstangen oder kunstoffummantelten Kabeln, zum Beispiel als Zugentlastung bei Stromkabeln eingesetzt werden.

Durch besondere Ausgestaltung der Schraubenmutter können die zwei Teile der Schraubenmutter identisch sein. Dies ist beispielsweise bei einem zweigängigen Gewinde ohne weiteres möglich, wenn Teile rotationssymmetrisch, das heißt bei Drehung um 180° identisch zueinander, in bezug auf die Gewindeachse oder eine in der Teilungsebene und radial zur Gewindeachse verlaufende Symmetrieachse sind. Bei einem üblichen eingängigen Gewinde können die identischen Schraubenmutternteile rotationssymmetrisch in bezug auf eine in der Teilungsebene liegende und radial zur Gewindeachse verlaufende Symmetrieachse sein. Die Mutternteile weisen dabei vorzugsweise eine nach oben gerichtete und eine nach unten gerichtete Schrägfläche auf, die an zwei rechtwinklig zur Teilungsebene verlaufenden Verriegelungsarmen angeordnet sind, welche als Verbindungselemente wirken. Diese Schrägflächen legen sich beim Verbinden auf die gegenüberliegenden Schrägflächen des komplementären Teils. Die Teile werden beim Verbinden auf einander zu verschoben und schraubenartig ineinander gedreht.

Eine Schraubenmutter, bestehend aus zwei identischen Teilen, hat den Vorteil, daß sie in hoher Stückzahl sehr kostengünstig herstellbar ist. Insbesondere kann jedes Teil der Schraubenmutter in einem Formpreßvorgang hergestellt sein. Außerdem kann der Benutzer beliebige Mutternteile miteinander verbinden und muß nicht zwei zueinander passende Mutternteile heraussuchen.

Bei Muttern mit eingängigem Innengewinde, die äußerlich symmetrische Formen haben mögen, deren Gewindegänge aber nicht symmetrisch sind, sowie bei unsymmetrischen Teilen besteht die Gefahr, daß der Anwender versucht, die Teile falsch zusammenzusetzen. Oberseite und Unterseite solcher Teile können zusätzlich markiert sein, beispielsweise durch Einkerbungen oder sonstige Markierungen, um Fehler beim Zusammensetzen zu vermeiden. Ein falsches Zusammenfügen kann aber auch durch geeignete Formgebung der Verbindungselemente verhindert werden, indem die äußere Symmetrie nur in bezug auf eine Achse existiert und in bezug auf die zweite Achse durch unterschiedliche Ausbildung der Führungsflächen aufgehoben ist. In diesem Fall können die Teile offensichtlich nicht falsch zusammengefügt werden.

Zusätzlich können die Teile der Schraubenmutter miteinander zusammenwirkende Halteelemente umfassen, welche diese Teile in der Verwendungsposition oder kurz davor, das heißt in zumindest teilweise zusammengeschobener Stellung aneinander fixieren. Ohne derartige Halteelemente besteht die Gefahr, daß bei einem Aufschrauben der Schraubenmutter auf dem Außengewinde sich die Teile ungewollt voneinander lösen, solange die Anlagefläche nicht fest gegen die Stützfläche gedrückt wird.

Die Halteelemente können beispielsweise von einander anziehenden Magneten oder einem Magneten und einem ferromagnetischen Materialabschnitt gebildet werden. Es sind aber auch formschlüssig ineinandergreifende Halteelemente wie Rastvorsprünge und hierzu komplementäre Rastausnehmungen möglich, welche ein Verrasten der Teile der Schraubenmutter in der Verwendungsposition sicherstellen. Die Fixierung der Mutternteile am Außengewinde oder aneinander kann aber auch durch andere geeignete Maßnahmen, insbesondere Formgebung der Verbindungselemente (Hinterschneidungen, Verformung der Mutter, Reibung/Spannung am Außengewinde und aneinander) erreicht werden.

Die Schraubenmutter gemäß der Erfindung kann wie folgt benutzt werden. Beim Zusammenschieben der Mutternteile in radialer Richtung erfolgt zusätzlich zur Verschiebung der Teile zumindest im letzten Bewegungsabschnitt, kurz vor der Verwendungsposition, eine Rotation bzw. ein Verschwenken der Teile um eine quer zur Achse des Innengewindes verlaufende Rotationsachse.

Bei dieser Rotation können zwei komplementär gewölbte Führungsflächen der Teile aufeinander gleiten.

Wie erwähnt, kann jedes der Teile mit einer in seinem Randbereich befindlichen Schrägfläche auf eine Stützfläche gelegt werden, die mit dem Außengewinde verbunden sind. Hierdurch weisen die Teile zueinander eine Schrägstellung auf, die ein Ineinanderfügen der Teile begünstigt. Die Teile werden also in einer Montagestellung aufeinander zu bewegt, in der ihre Verbindungselemente ineinander greifen und nachfolgend die weitere Bewegung der Teile führen.

Die erfindungsgemäße Schraubenmutter kann im Bereich eines Endes des Innengewindes eine sich zur Achse des Innengewindes hin erstreckende Schulter aufweisen. Diese Schulter hat vorzugsweise eine ringförmige zur Mitte des Innengewindes ragende Form und ist jeweils zur Hälfte an einem Mutternteil angeordnet. Die radial nach innen ragende Schulter kann nach Art einer Überwurfmutter einen radialen Absatz eines mit der Mutter an einem Außengewindes festzuschraubenden Gegenstands, z.B. eines Rohrstutzens, umgreifen und beim Festschrauben gegen eine Stirnwand des Außengewindes drücken. Die radiale Schulter kann von einer Wandung einer sich an das Innengewinde anschließenden Nut gebildet werden. Anders als bei üblichen Schrauben ist es nicht erforderlich, daß der radiale Absatz des festzuschraubenden Gegenstands durch das Innengewinde hindurchgeschoben werden muß, bevor er gegen die nach innen ragende Schulter anliegt. Der radiale Absatz des Gegenstands kann beim Zusammenschieben der Mutter in eine Nut eingefügt werden, in der der radiale Absatz mit geringem Spiel aufgenommen ist. Es ist aus diesem Grund auch nicht nötig, daß der radiale Absatz und die Nut oder die Schulter der Mutter rund sind. Sie können von der runden Form abweichende, komplementäre Formen aufweisen und formschlüssig beim Zusammenschieben der Mutternteile ineinandergefügt werden.

Schließlich betrifft die Erfindung ein Werkzeug zum Anbringen einer Schraubenmutter der oben beschriebenen Art. Dieses Werkzeug weist für jedes Teil der Schraubenmutter eine Haltevorrichtung auf. Die Haltevorrichtungen sind über Antriebsmittel, insbesondere Gelenkverbindungen und Hebelverbindungen, derart miteinander gekoppelt, daß sie die Verschiebe- und Schwenkbewegung der Teile entweder aktiv ausführen oder zumindest passiv zulassen. Zunächst führen sie eine Verschiebebewegung zueinander in einer radial zur Achse des Innengewindes verlaufenden Richtung aus. Anschließend führen sie zumindest in dem letzten Bewegungsabschnitt, bevor die Teile in der Schraubenmutter die Verwendungsposition erreicht haben, eine Schwenk- oder Rotationsbewegung um eine quer zur Achse des Innengewindes verlaufende Rotationsachse aus. Zu diesem Zweck können die Haltevorrichtung entweder in der vorgegebenen Bewegungsbahn angetrieben sein oder zumindest durch Gelenke die erforderlichen Freiheitsgrade aufweisen.

Zum Öffnen der Schraubenmutter kann das Werkzeug eine gegenläufige Bewegung ausführen. Das Werkzeug kann beispielsweise nach Art einer Zange ausgebildet sein, wobei die Haltevorrichtungen die beiden Backen der Zange bilden. Sie sind über ein beliebiges Getriebe derart durch die beiden Hebel der Zange angetrieben, daß die zum Erreichen der Verwendungsposition erforderliche Schwenkbewegung oder Rotationsbewegung ausgeführt wird. Insbesondere bei Schraubenmutternteilen mit Halteelementen kann das Werkzeug sicherstellen, daß die Haltekraft der Halteelemente zum Lösen der Schraubenmutternteile sicher überwunden wird, falls ein manuelles Entfernen der Schraubenmutternteile von dem Außengewinde nicht möglich ist.

Vorteilhafte Ausführungsformen der Erfindung werden nachfolgend unter Bezugnahme auf die beigefügten Zeichnungen beschrieben. Dabei ist anzumerken, daß insbesondere die äußere Kontur der dargestellten Schraubenmuttern nur beispielhaft ist. Jede Ausführungsform kann mit beliebigen äußeren Konturen und insbesondere als Vierkantmutter, Sechskantmutter, Flügelmutter oder Hutmutter ausgebildet sein.

Die Zeichnungen zeigen in:
- Fig. 1: eine schaubildliche Darstellung einer ersten Ausführungsform einer erfindungsgemäßen Schraubenmutter in der Verwendungsposition an einem Außengewinde;
- Fig. 2: eine Seitenansicht der Schraubenmutter aus Fig. 1;
- Fig. 3: eine schaubildliche Darstellung der Schraubenmutter aus Fig. 1 in etwas geöffneter Stellung;
- Fig. 4: eine Seitenansicht der Darstellung aus Fig. 3;
- Fig. 5: eine schaubildliche Darstellung der Schraubenmutter aus den Fig. 1 und 3 in weiter geöffneter Stellung;
- Fig. 6: eine Seitenansicht der Schraubenmutter aus Fig. 5;
- Fig. 7: eine schaubildliche Darstellung des ersten Teils der Schraubenmutter aus den Fig. 1 - 6;
- Fig. 8: eine schaubildliche Darstellung des zweiten Teils der Schraubenmutter aus den Fig. 1 - 6;
- Fig. 9: eine schaubildliche Darstellung einer zweiten Ausführungsform einer erfindungsgemäßen Schraubenmutter in Verwendungsposition an einem Außengewinde;
- Fig. 10: eine schaubildliche Darstellung der Schraubenmutter aus Fig. 9 in leicht geöffneter Stellung;
- Fig. 11: eine schaubildliche Darstellung der zwei Einzelteile der Schraubenmutter aus den Fig. 9 und 10;
- Fig. 12: eine schaubildliche Darstellung der Teile der Schraubenmutter aus den Fig. 9 - 11 während des Anbringens an einem Außengewinde;
- Fig. 13: die Seitenansicht der Schraubenmutter aus Fig. 12;
- Fig. 14: eine der Fig. 12 entsprechende Darstellung, bei der die Teile der Schraubenmutter umgedreht sind;
- Fig. 15: eine Seitenansicht der Darstellung aus Fig. 14;
- Fig. 16 - 21: eine den Fig. 1 - 6 entsprechende Abfolge von Darstellungen einer weiteren Ausführungsform der Schraubenmutter;
- Fig. 22: eine schaubildliche Darstellung eines der zwei identischen Teile der Schraubenmutter aus den Fig. 16 - 21;
- Fig. 23 - 28: eine den Fig. 1 - 6 entsprechende Abfolge von Darstellungen einer weiteren Ausführungsform einer erfindungsgemäßen Schraubenmutter;
- Fig. 29: eine schaubildliche Darstellung einer weiteren Äusführungsform der erfindungsgemäßen Schraubenmutter;
- Fig. 30: eine schaubildliche Explosionsansicht der zwei Teile der Schraubenmutter aus Fig. 29;
- Fig. 31: eine Draufsicht auf eines der Teile der Schraubenmutter aus den Fig. 29 und 30;
- Fig. 32: ein Teil der Schraubenmutter zur Bildung einer Überwurfmutter in schaubildlicher Darstellung;
- Fig. 33: eine schaubildliche Darstellung einer Schraubenmutter mit Halteelementen im teilweise zusammengeschobener Stellung und
- Fig. 34: die beiden Teile eine Schraubenmutter mit Halteelementen.

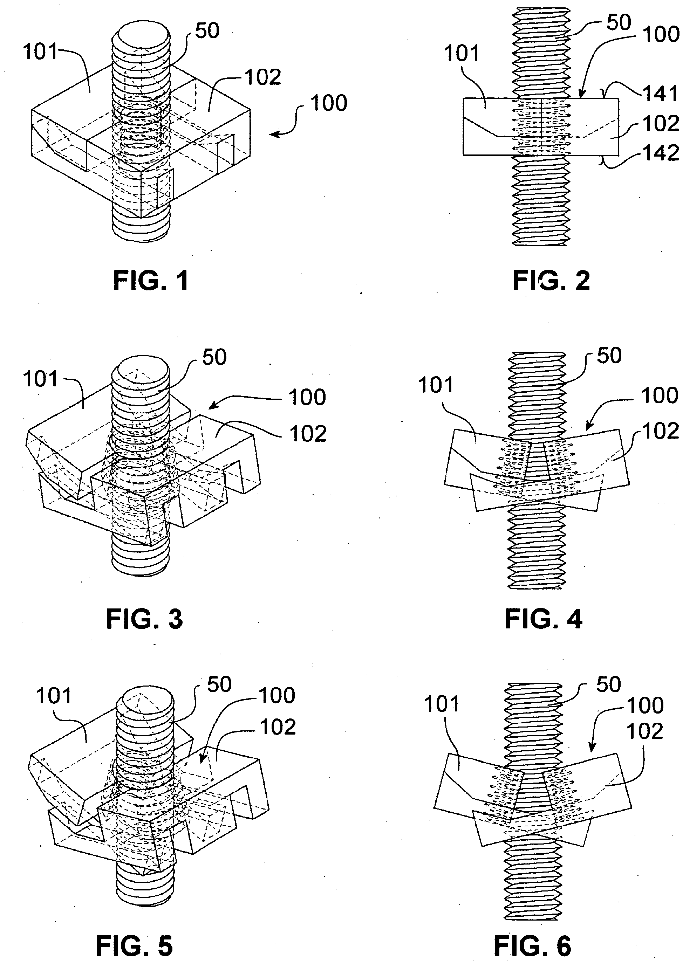

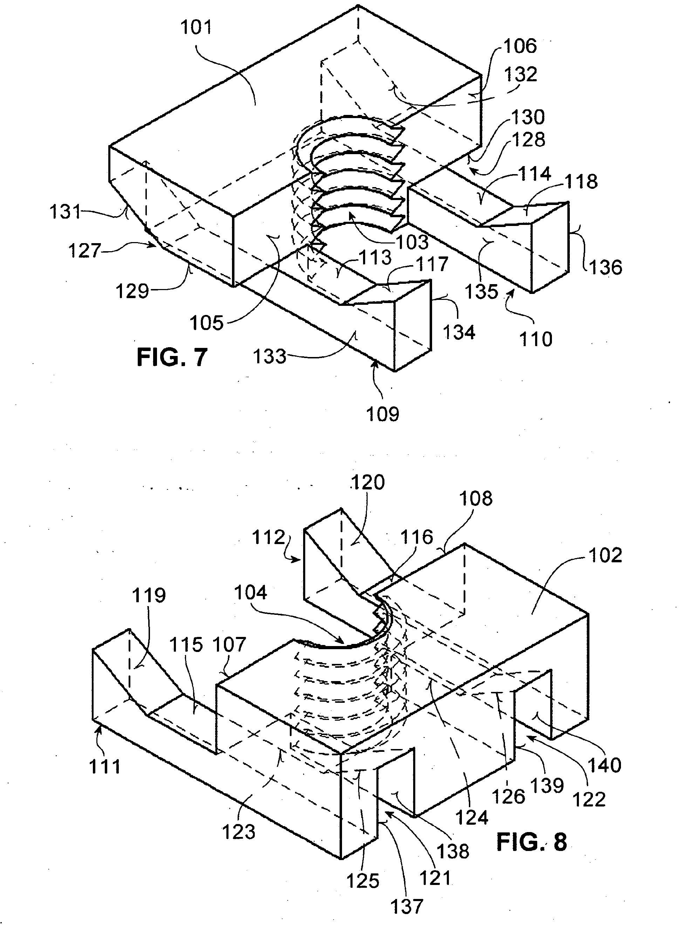

Die Fig. 1 - 8 zeigen eine erste Ausführungsform einer erfindungsgemäßen Schraubenmutter 100. Sie besteht aus zwei Teilen 101,102, die einander ergänzend geformt sind. In den Fig. 1 und 2 sind die Teile 101,102 derart zusammengesteckt, daß sie ein Außengewinde 50 mit geringem Spiel umgeben. Diese Position der Teile 101, 102 der Schraubenmutter wird in dieser Beschreibung Verwendungsposition genannt. Insbesondere die Fig. 7 und 8 zeigen, daß jedes der Mutternteile 101,102 einen Innengewindeabschnitt 103 bzw. 104 aufweist, die zusammen ein Innengewinde bilden, welches in der zusammengesteckten Verwendungsposition der Mutternteile 101,102 (Fig. 1 und 2) das Außengewinde 50 mit einem geringen Spiel umgibt.

Jeder Innengewindabschnitt 103,104 erstreckt sich über 180° des Innengewindes. Die Innengewindeabschnitte 103,104 sind in einer Ebene voneinander getrennt, welche in der in den Fig. 1 und 2 dargestellten Verwendungsposition die Gewindeachse enthält.

Die Fig. 7 und 8 zeigen, daß beide Mutternteile 101,102 Anschlagflächen 105 - 108 aufweisen, die in der Teilungsebene des Innengewindes verlaufen. Diese Anschlagflächen 105 - 108 liegen in der Verwendungsposition (Fig. 1 und 2) gegeneinander an. In dieser Verwendungsposition ist das Innengewinde geschlossen, und seine Gewindegänge umgeben die Gewindegänge des Außengewindes 50 mit einem üblichen Gewindespiel.

In den Fig. 7 und 8 sind ferner vier Verriegelungsarme 109 - 112 zu erkennen. Zwei der Verriegelungsarme 109,110 sind an dem ersten Mutternteil 101 angeordnet und erstrecken sich im wesentlichen rechtwinklig zu den Anschlagflächen 105 und 106. Zwei Verriegelungsarme 111 und 112 sind an dem zweiten Mutternteil 102 vorgesehen und erstrecken sich im wesentlichen rechtwinklig zu den zwei Anschlagflächen 107 und 108.

Jeder der Verriegelungsarme 109 - 112 weist eine sich in einer radialen Ebene des Gewindes erstreckende Führungsfläche 113 - 116 auf, an die sich eine schräge Führungsfläche 117 - 120 anschließt. Die schrägen Führungsflächen 117 - 120 erstrecken sich in einem den Anschlagflächen 105 - 108 des jeweils gleichen Mutternteils 101,102 gegenüberliegenden Bereich.

Das zweite Mutternteil 102 weist zwei Aufnahmenuten 121,122 auf, in welche die Verriegelungsarme 109 und 110 des ersten Mutternteils 101 einfügbar sind. Die Breite der Aufnahmenuten 121,122 entspricht im wesentlichen der Breite der Verriegelungsarme 109,110. Die Aufnahmenuten 121,122 weisen ebenfalls eine radiale Führungsfläche 123,124 und eine schräge Führungsfläche 125,126 auf.

Das erste Mutternteil 101 weist dagegen im äußeren Bereich Aufnahmeabschnitte 127,128 auf. In diese Aufnahmeabschnitte fügen sich die zwei Verriegelungsarme 111, 112 des zweiten Mutternteils 102 in der Verwendungsposition. Auch die Aufnahmeabschnitte 127,128 weisen jeweils eine radial zur Achse des Innengewindes verlaufende Führungsfläche 129,130 und eine schräge Führungsfläche 131,132 auf. In der Verwendungsposition liegen die schrägen Führungsflächen 131,132 der Aufnahmeabschnitte 127,128 gegen die schrägen Führungsflächen 119,120 der Verriegelungsarme 111,112 an. Ebenso liegen die schrägen Führungsflächen 125,126 in den Aufnahmenuten 121,122 des zweiten Mutternteils 102 gegen die schrägen Führungsflächen 117,118 der Verriegelungsarme 109,110 des ersten Mutternteils 101 an. Entsprechendes gilt für die radialen Führungsflächen 113 - 116, der Verriegelungsarme 109 - 112, welche gegen die jeweils entsprechenden radialen Führungsflächen 123,124,129,130 der Aufnahmenut 121,122 bzw. Aufnahmeabschnitt 127,128 anliegen.

Wie in den Fig. 3 bis 6 erkennbar, gleiten die schrägen Führungsflächen 117 - 120, 125, 126, 131, 132 aufeinander, wenn die beiden Mutternteile 101,102 aus der Verwendungsposition voneinander entfernt werden. Dabei werden die beiden Mutternteile 101,102 in der Richtung der Verriegelungsarme 109 - 112 auseinandergezogen. Durch das Gleiten der schrägen Führungsflächen aufeinander ergibt sich eine Kippbewegung oder Rotationsbewegung der beiden Mutternteile 101,102 um eine Achse, die radial zur Achse des Außengewindes 50 verläuft und sich in der Teilungsebene der Mutternteile 101,102, die in der Verwendungsposition durch die Anschlagflächen 105 - 106 definiert ist, erstreckt.

Diese Kippbewegung bewirkt, daß die Oberseite 141 und die Unterseite 142 der beiden Mutternteile 101,102 von einer ebenen Fläche abweichend geknickt werden. Die Kippbewegung ist gehemmt, wenn die Oberseite 141 oder die Unterseite 142 der Schraubenmutter 100 gegen eine ebene Stützfläche anliegt. Wenn also die Mutter in der Verwendungsposition (Fig. 1 und 2) fest gegen eine Stützfläche geschraubt ist, ist die in den Fig. 3 - 6 dargestellte Schwenkbewegung nicht mehr möglich. Die Mutter wird durch die Führungsflächen 113 - 120, 123 - 126, 129 - 132 geschlossen gehalten und umgibt das Außengewinde 50 mit geringem Spiel. So ist die Schraubenmutter 102 zur Kraftübertragung in axialer Richtung des Außengewindes 50 geeignet.

Wenn die Schraubenmutter 100 dagegen an dem Außengewinde 50 so weit verschraubt ist, daß sie von einer Stützfläche entfernt ist, kann sie gemäß dem Bewegungsablauf, der in den Fig. 1 - 6 dargestellt ist, geöffnet und von dem Außengewinde 50 entfernt werden. Umgekehrt kann sie gemäß dem Bewegungsablauf der Fig. 6, 4 und 2 oder 5,3 und 1 durch Ineinanderfügen der Schraubenmutternteile 101, 102 an einem Außengewinde 50 angebracht werden. Somit entfällt das zeitaufwendige Aufschrauben der Schraubenmutter 100 über die gesamte Länge des Außengewindes 50 bis zum festen Verschrauben. Zudem kann die Schraubenmutter 100 auch an Außengewinden 50 angebracht werden, deren Enden nicht frei erreichbar sind. Sie kann sogar an Außengewinden 50 angebracht werden, die sich nur über einen Teilabschnitt einer Stange erstrecken, so daß ein Aufschrauben von einem Ende auf das Außengewinde nicht möglich wäre.

Die Einsatzmöglichkeiten der Schraubenmutter aus den Fig. 1 - 8 sind sehr vielfältig. Sie kann insbesondere auch zum Ersatz gewöhnlicher Schraubenmuttern verwendet werden, da das Aneinanderfügen der Mutternteile 101,102 in radialer Richtung gegenüber dem Aufschrauben auf ein längeres Außengewinde Zeit spart. Dadurch, daß die schrägen Führungsflächen 117 - 120 an den Verriegelungsarmen 109 - 112 und die komplementären schrägen Führungsflächen 125, 126, 131,132 in den Aufnahmenuten 121, 122 und Aufnahmeabschnitten 127,128 die Mutternteile 101,102 beim Verschieben zueinander in eine Rotationsbewegung oder Schwenkbewegung führen, werden die Teile 101,102 der Schraubenmutter 100 beim Festschrauben gegen eine radial zum Außengewinde 50 verlaufende Anlagefläche sicher in ihrer Verwendungsposition verriegelt.

Die sich parallel zur Gewindeachse erstreckenden zusätzlichen Führungsflächen 133 - 140 führen die beiden Mutternteile 101,102 bei der radialen Verschiebebewegung in die Verwendungsposition hinein. Dabei liegen die achsparallelen zusätzlichen Führungsflächen 133 - 136 des ersten Mutternteils 101 mit geringem Spiel gegen die komplementären achsparallelen Führungsflächen 137 - 140 in den Aufnahmenuten 121,122 des zweiten Mutternteils 102 an. Die Anlagefläche der Schraubenmutter 100 aus den Fig. 1 - 8 kann sowohl von deren Oberseite 141 als auch von deren Unterseite 142 gebildet werden.

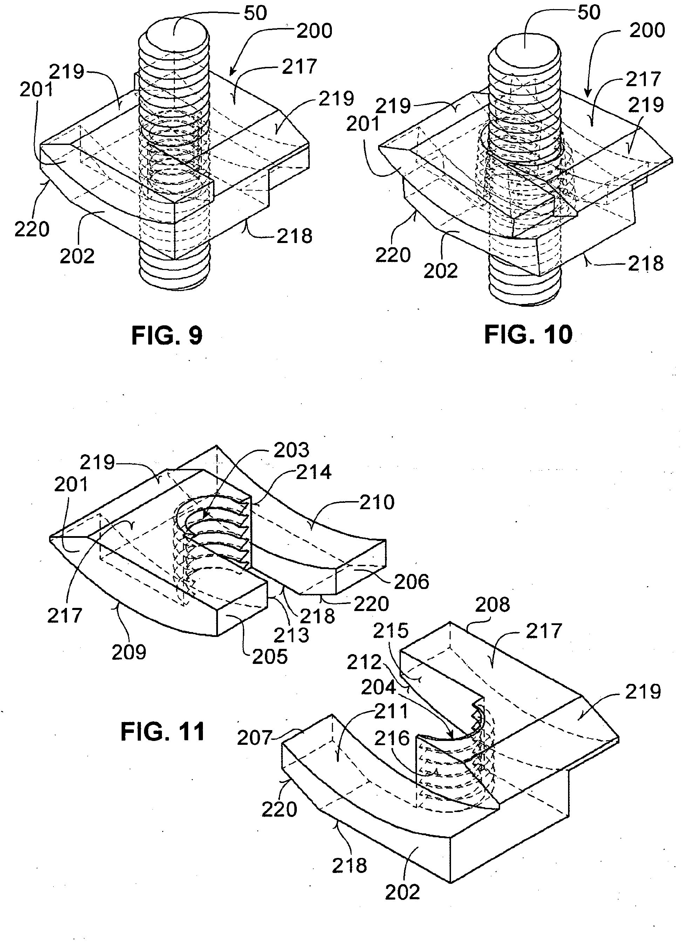

Die Fig. 9 - 15 zeigen eine alternative Ausführungsform der erfindungsgemäßen Schraubenmutter 200. Die Schraubenmutter 200 besteht wieder aus zwei Mutternteilen 201, 202. Das Mutternteil 201 weist einen ersten, sich über 180° erstreckenden Innengewindeabschnitt 203 auf. Das zweite Mutternteil 202 weist den zweiten, gegenüberliegenden Innengewindeabschnitt 204 auf.

Jedes der Mutternteile 201,202 weist zwei Verriegelungsarme 205,206 bzw. 207,208 auf. Dabei erstrecken sich die zwei Verriegelungsarme 205,206 bzw. 207,208 eines Mutternteils 201 bzw. 202 zu beiden Seiten einer Mittelebene, die rechtwinklig zur Teilungsebene des Innengewindes verläuft. Die beiden Verriegelungsarme 205,206 bzw. 207,208 der zwei Mutternteile 201 bzw. 202 weisen jeweils eine Führungsfläche 209 - 212 auf. Die zwei Führungsflächen 209,210 bzw. 211,212 jedes Mutternteils 201 bzw. 202 weisen im wesentlichen in entgegengesetzte Richtungen. So weist beim ersten Mutternteil 201 die in Fig. 11 auf der linken Seite der Mittelebene liegende Führungsfläche 209 nach unten und die rechts der Mittelebene liegende Führungsfläche 210 nach oben. Entsprechend und ergänzend weist die in Fig. 11 auf der linken Seite der Mittelebene liegende Führungsfläche 211 des zweiten Mutternteils 202 nach oben und die Führungsfläche 212 des Mutternteils 202, die rechts der Mittelebene liegt, nach unten. Die nach unten weisende Führungsfläche 212 des rechts der Mittelebene liegenden Verriegelungsarms 208 des zweiten Mutternteils liegt in der Verwendungsposition gegen die nach oben weisende Führungsfläche 210 des rechts der Mittelebene liegenden Veiriegelungsarms 206 des ersten Mutternteils an. Entsprechend liegt die nach oben weisende Führungsfläche 211 des zweiten Mutternteils links der Mittelebene gegen die nach unten weisende Führungsfläche 209 des linken Verriegelungsarms 205 des ersten Mutternteils 201 an.

Die Art der Schwenkbewegung, welche die zwei Mutternteile 201,202 beim Lösen vom Innengewinde 50 zueinander ausführen, ist in den Fig. 9 (Verwendungsstellung, in der die Mutternteile das Innengewinde eng umgeben) und 10 (ein wenig geöffnete Mutternteile) zu erkennen. Alle Führungsflächen 209 - 212 verlaufen entlang einer gemeinsamen Zylindermantelfläche, welche um eine rechtwinklig zur Gewindeachse verlaufende Zylinderachse, die in der Teilungsebene des Innengewindes liegt, gewölbt ist. Auf diese Weise werden die zwei Mutternteile 201,202 durch Verschwenken entlang dieser Zylindermantelfläche aneinander gefügt oder voneinander gelöst.

Ein Verkippen der Mutternteile 201,202 um eine parallel zu den Verriegelungsarmen 205 - 208 verlaufende Achse während des Verschwenkens entlang der zylindermantelförmigen Führungsflächen 209 - 212 wird durch gegeneinander anliegende zusätzlichen Führungsflächen 213 - 216 vermieden, die sich parallel zur Achse des Innengewindes und in die Verschieberichtung der Mutternteile, d.h. senkrecht zur Teilungsebene des Innengewindes, erstrecken.

Das Verschwenken entlang der zylindermantelförmig gewölbten Führungsflächen 209 - 212 führt wiederum dazu, daß die Oberseite 217 oder die Unterseite 218 der Schraubenmutter 200 von ihrer in der Verwendungsposition (siehe Fig. 9) gegebenen ebenen Ausgestaltung abweicht. Folglich ist ein Verschwenken und Lösen der Schraubenmutter 200 vom Außengewinde 50 blockiert, wenn entweder die Oberseite 217 oder die Unterseite 218 durch das Festschrauben an dem Außengewinde 50 gegen eine Stützfläche gedrückt wird.

Der Bewegungsablauf beim Verbinden der Mutternteile 201,202 der Ausführungsform der Schraubenmutter 200 aus den Fig. 9 - 15 entspricht im wesentlichen dem Bewegungsablauf beim Öffnen und Schließen der Mutternteile 101,102 der Ausführungsform aus den Fig. 1 - 8. Die Mutternteile werden rechtwinklig zur Teilungsebene des Innengewindes zueinander verschoben und dabei um eine in der Teilungsebene des Innengewindes verlaufende, sich rechtwinklig zur Gewindeachse erstreckende Rotationsachse verschwenkt.

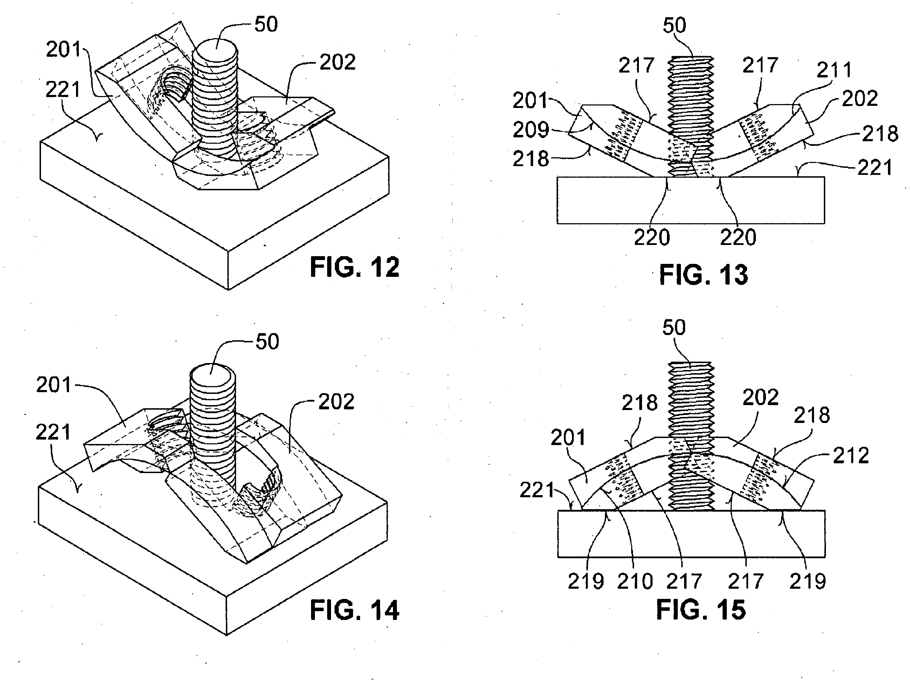

Die Fig. 12 - 15 zeigen Montagehilfsmittel, die an den beiden Mutternteilen 201,202 der Schraubenmutter 200 angeordnet sind. Beim Ineinanderfügen der zwei Mutternteile 201,202 werden diese um einen Winkel verschwenkt aufeinander zu geschoben, wobei die Achsen der Gewindeabschnitte 203,204 zusammen mit der Achse des Außengewindes 50 in einer Ebene liegen sollten. Um diese Stellung der Mutternteile zu gewährleisten, weisen die sich quer zur Verschieberichtung erstreckenden Kanten der Oberseite 217 und der Unterseite 218 Schrägflächen 219,220 auf. Diese Schrägflächen 219,220 verlaufen in der Stellung der Mutternteile 201,202 zueinander, in der die Führung entsprechend der Schwenkbewegung durch die zylindrisch gewölbten Führungsflächen 209 - 212 einsetzt, zueinander parallel. Um die Mutternteile 201,202 ineinanderzufügen, können diese mit den Schrägflächen 219 oder 220 auf eine benachbarte Stützfläche 221 (siehe Fig. 12 - 15) aufgelegt und die zwei Mutternteile aufeinander zu geschoben werden, wobei das Außengewinde 50 eine seitliche Führung für die Mutternteile 201,202 bildet. In den Fig. 12 und 13 werden die Mutternteile 201,202 so montiert, daß sie sich mit ihrer Unterseite 218 gegen die Stützflächen 221 abstützen sollen. Folglich werden die Schrägflächen 220 an den Kanten der Unterseite 218 gegen die Stützfläche 221 angelegt, so daß die entsprechende Neigung der Mutternteile 201,202 erzielt wird. Nach dem Verschwenken der Mutternteile 201,202 entlang des Zylindermantels, auf dem ihre Führungsflächen 209 - 212 liegen, befinden sich die zwei Mutternteile 201,202 in der Verwendungsposition nahe der Stützfläche 221 und müssen nur noch festgeschraubt werden. Das Festschrauben erfordert nur noch wenige Drehungen der Mutter. Es ist sogar möglich, die Mutter sehr nahe der Stützfläche zusammenzufügen, so daß weniger als eine Umdrehung zum Festschrauben erforderlich ist.

Die Fig. 14 und 15 zeigen die Mutternteile 201,202 in umgedrehter Position. Die in den Fig. 9 - 13 oben liegende Oberseite 217 liegt nun unten und der Stützfläche 221 gegenüber. Entsprechend liegt die in den Fig. 9 - 13 unten liegende Seite 218 in der Darstellung der Fig. 14 und 15 oben. Entsprechend werden die Schrägflächen 219 gegen die Stützfläche 221 gedrückt, wobei die Mutternteile 201,202 anschließend aufeinander zu geschoben werden. Die zwei Schrägflächen 219 und 220 weisen einen Winkel zur daran angrenzenden Anlagefläche 217 bzw. 218 auf, der dem Rotationswinkel entspricht, um welchen das Teil 201,202 der Schraubenmutter gedreht wird, wenn es von dem ersten Ineinanderfügen (Fig. 12,13 oder 14,15) in die Verwendungsposition bewegt wird.

Die Wölbung mindestens einer der Führungsflächen 209 - 212 kann von der exakten Form der Zylindermantelfläche der Rotationsbewegung abweisen. So können insbesondere die konkav gewölbten Flächen etwas stärker gewölbt sein, wobei die konvex gewölbten Flächen exakt zylindermantelförmig oder etwas weniger gewölbt sein können.

Diese Abweichungen von der zylindermantelförmigen Wölbung führen dazu, daß die Verriegelungsarme 206 und 207 mit konkav gewölbter Führungsfläche 210 bzw. 211 bei steigendem axialen Druck ein wenig aufgebogen werden. Die Mutternteile 201 und 202 bestehen im allgemeinen aus Stahl oder einer Metallegierung, die eine gewisse Elastizität aufweist. Das elastische Aufbiegen der Verriegelungsarme 206,207 hat im wesentlichen den Effekt einer Federscheibe. Bei schwankenden Belastungen des Außengewindes 50, auf das die Mutter aufgeschraubt ist, löst sich nicht sofort die Mutter 200, sondern es werden die Verspannungen durch das elastische Verbiegen der Verriegelungsarme 206,207 abgebaut.

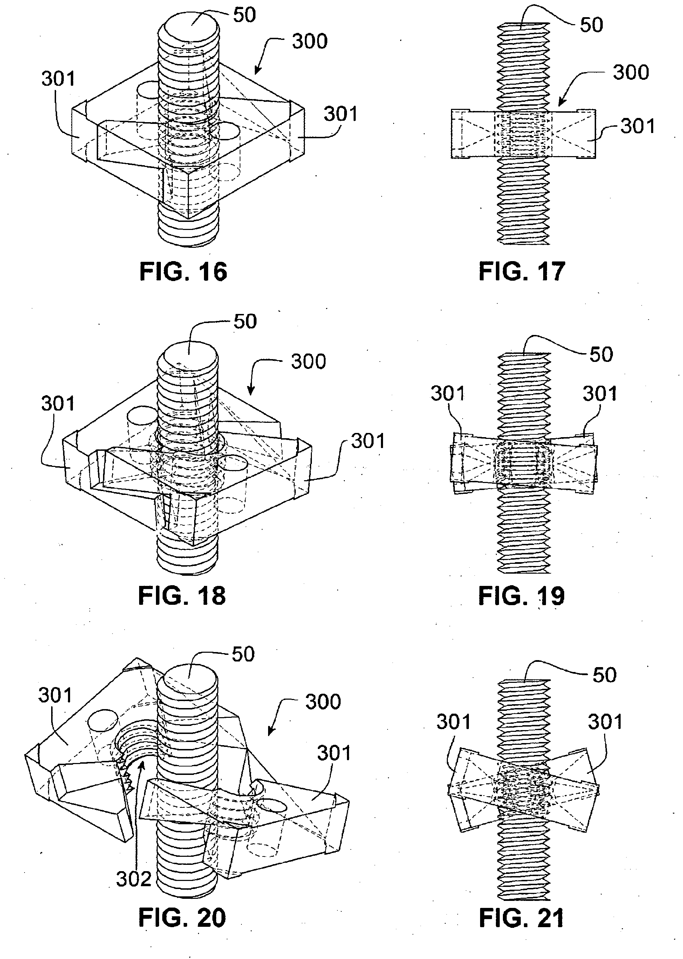

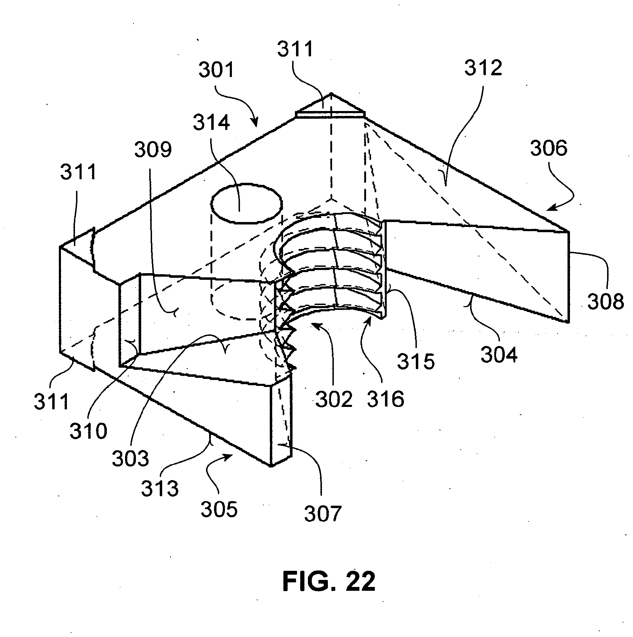

Die Fig. 16 - 22 zeigen eine weitere Ausführungsform einer Schraubenmutter 300. Sie besteht aus zwei identischen Mutternteilen 301. Das Mutternteil 301 ist vergrößert in Fig. 22 dargestellt. Es weist wieder einen Innengewindeabschnitt 302 auf, der sich über 180° des Innengewindes erstreckt und in einer Teilungsebene geteilt ist, die diametral zum Innengewinde verläuft und die Gewindeachse enthält. Die Führungsflächen 303 und 304 verlaufen schräg zur radialen Ebene. Ihr Verlauf ist dem Verlauf einer Wendelfläche angenähert, die sich um den rechtwinklig zur Teilungsebene liegenden Radius des Innengewindes windet. Wie insbesondere in den Fig. 16 - 21 zu erkennen, werden die zwei Mutternteile 301 beim Ineinanderschieben in der Richtung rechtwinklig zur Teilungsebene schraubenartig gedreht. Bei der Ausführungsform der Schraubenmutter 300 aus den Fig. 16 - 22 sind die Führungsflächen 303 und 304 selbst nicht gewunden, sondern eben ausgebildet, so daß keine flächige Führung erfolgt, sondern nur ein punktartiger oder linienartiger Kontakt beim Ineinanderschieben oder Auseinanderschieben der Mutternteile 301 vorhanden ist.

Es ist zu erkennen, daß die Führungsfläche 303 in Draufsicht eine andere Kontur aufweist als die Führungsfläche 304. Die Führungsfläche 303 ist an einem spitz zulaufenden Verriegelungsarm 305 angeordnet, der in eine stumpfe Stirnfläche 307 mündet. Entsprechend grenzt an die vertikale zusätzliche Führungsfläche 309, welche die schräge Führungsfläche 303 begrenzt, eine weitere zusätzliche vertikale Führungsfläche 310, die bei zwei ineinandergesteckten Teilen 301 der Stirnfläche 307 des Verriegelungsarms 305 gegenüberliegt. Auf der anderen Seite verläuft der Verriegelungsarm 306 bis zu einer spitzwinkligen Kante 308. Die zusätzliche vertikale Führungsfläche 315, welche an die zweite schräge Führungsfläche 304 am zweiten Verriegelungsarm 306 angrenzt, verläuft dagegen in einem spitzen Winkel bis zur Außenfläche im Bereich des zweiten Verriegelungsarms 306.

Es ist zu erkennen, daß das Mutternteil 301 mit einem zweiten Mutternteil 301 nur dann zusammengesteckt werden kann, wenn es um eine diametral zum Innengewinde und in der Teilungsebene des Innengewindeabschnitts 302 verlaufende Achse gedreht wird. Eine Drehung des Mutternteils 301 um die Gewindeachse selbst würde grundsätzlich auch zu einem Übereinstimmen der schrägen Führungsflächen 304 und 303 führen. Allerdings würden dann die Innengewindeabschnitte 302 der zwei Mutternteile 301 nicht mehr aneinanderpassen, so daß das formschlüssige Anliegen an das Außengewinde 50 nicht mehr gegeben wäre. Durch das Verkürzen der Führungsfläche 303 auf einer Seite des Mutternteils 301 wird somit eine Verdrehsicherung der Mutternteile 301 bewirkt. Die Mutternteile 301 passen nur dann zusammen, wenn die Führungsfläche 303 einer identisch ausgebildeten Führungsfläche 303 eines zweiten Mutternteils 301 gegenüberliegt.

In den Fig. 16 - 22 ist ferner zu erkennen, daß die Mutternteile 301 Vorsprünge 311 im Bereich aller vier Ecken aufweisen. Da zur Bildung der Mutter zwei identische Mutternteile miteinander verbunden werden, die um eine in der Teilungsebene des Gewindes liegende horizontale Achse gedreht sind, werden die zwei möglichen Anlageflächen von der Oberseite 312 (siehe Fig. 22) des ersten Mutternteils und der Unterseite 313 des zweiten Mutternteils gebildet. Wenn die Mutter 300 mit der Anlagefläche gegen eine Stützfläche geschraubt wird, bewirken die Vorsprünge 311 eine geringfügige elasti sche Durchbiegung der Mutternteile 301. Wiederum wird der Effekt einer Federscheibe beim Verschrauben der Schraubenmutter 300 auf einem Außengewinde 50 gegen eine Stützfläche bewirkt.

Die Fig. 22 zeigt ferner, daß sich parallel zum Gewindeabschnitt 302 eine axiale Bohrung 314 durch das Mutternteil 301 erstreckt. In die axiale Bohrung 314 kann ein Stift eines zangenartigen Werkzeugs gesteckt werden, welches zum Verbinden und Lösen der zwei Mutternteile 301 dient.

Schließlich zeigt Fig. 22, daß der in Umfangsrichtung des Innengewindeabschnitts 302 rechts liegende Endbereich 316 Abtragungen im Bereich der Gewindegänge aufweist. Der Innendurchmesser der Gewindegänge vergrößert sich in diesem Endbereich zum angrenzenden Bereich der Teilungsebene hin. In der Teilungsebene haben die Gewindegänge am rechten Endbereich 316 des Innengewindeabschnitts 302 weniger als die halbe Höhe als am linken Anfangsbereich des Innengewindeabschnitts 302. Diese Abtragung der Gewindegänge vermeidet, daß beim Anbringen der Mutter 300 an einem Außengewinde 50 die Gewindegänge in dem Endbereich 316 mit den Gewindegängen des Außengewindes 50 kollidieren, wodurch das Drehen der Mutternteile 301 in die Verwendungsposition blockiert werden könnte. Ferner begünstigt das spitze Zulaufen der Gewindegänge in dem Endbereich 316 die gewindeschneidende Wirkung der Gewindegänge des Mutternteils 301. Beim Aufbringen der Mutter 300 auf ein Kunststoffkabel oder einen Kunststoffstift ohne Außengewinde und beim Festdrehen der Mutter 300 dringen die Gewindegänge des Mutternteils zunächst mit den Spitzen im Endbereich 316 und dann zunehmend tiefer in das Kunststoffmaterial ein und formt auf diese Weise beim Aufschrauben das Außengewinde.

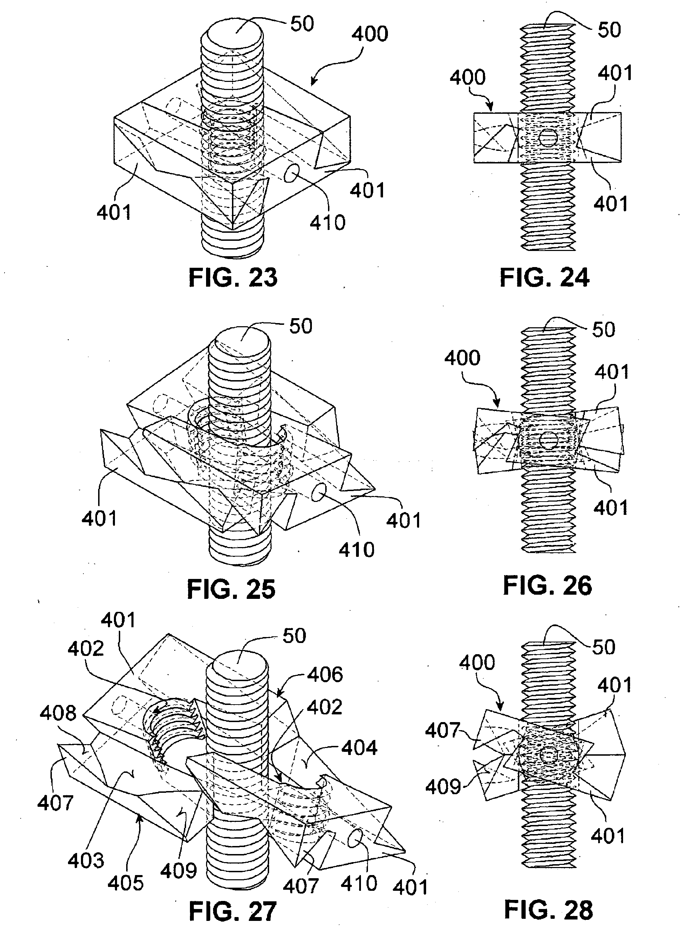

Die Fig. 23 - 28 zeigen eine weitere Ausführungsform einer erfindungsgemäßen Schraubenmutter 400. Dabei entspricht die Fig. 24 der Seitenansicht von hinten links der Schraubenmutter 400 aus der Fig. 23. Entsprechend stellen die Fig. 26 und 28 Seitenansichten von hinten links der Mutternteile 401 der Schraubenmutter 400 aus den Fig. 25 und 27 dar.

Wiederum sind beide Mutternteile 401 identisch. Bei der Ausführungsform aus den Fig. 23 - 28 verlaufen die Führungsflächen 403 und 404 auf einer Wendelfläche, die sich um wenige Grad (etwa 5 - 10° Schraubenwinkel) um die diametral zum Innengewinde verlaufende Achse windet, die senkrecht zur Teilungsebene der Innengewindeabschnitte 402 steht. Auch die Mutternteile 401 der Ausführungsform aus den Fig. 23 - 28 weist eine Verdrehsicherung auf. So schließt sich an die gewundene Führungsfläche 403 an einer Seite eine Spitze 407 mit einer dreieckigen Anschlagfläche 408 an. Entsprechend weist der Verriegelungsarm 405, an dem sich die Führungsfläche 403 befindet, eine dreieckige Schrägfläche im Bereich der vorderen Ecke des Verriegelungsarms 405 auf, welche sich gegen die Anschlagfläche 408 der Spitze 407 legt.

Die Bohrung 410 zur Aufnahme eines Stiftes eines zangenartigen Verbindungswerkzeugs erstreckt sich hier im wesentlichen in Verschieberichtung der zwei Schraubenmutternteile 401. Die Achse der Bohrung 410 liegt auf einem Durchmesser des Außengewindes 50 bzw. einem Radius jedes Innengewindeabschnitts 402, der rechtwinklig zur Teilungsebene der Innengewindeabschnitte 402 verläuft. Die Achse fällt mit der Verschieberichtung und der Rotationsachse für die Rotationsbewegung beim Zusammenschieben zusammen. Folglich können sich die Mutternteile 401 um die Achse der Bohrung 410 drehen, so daß der Stift des Werkzeugs selbst nicht drehbar ausgebildet sein muß.

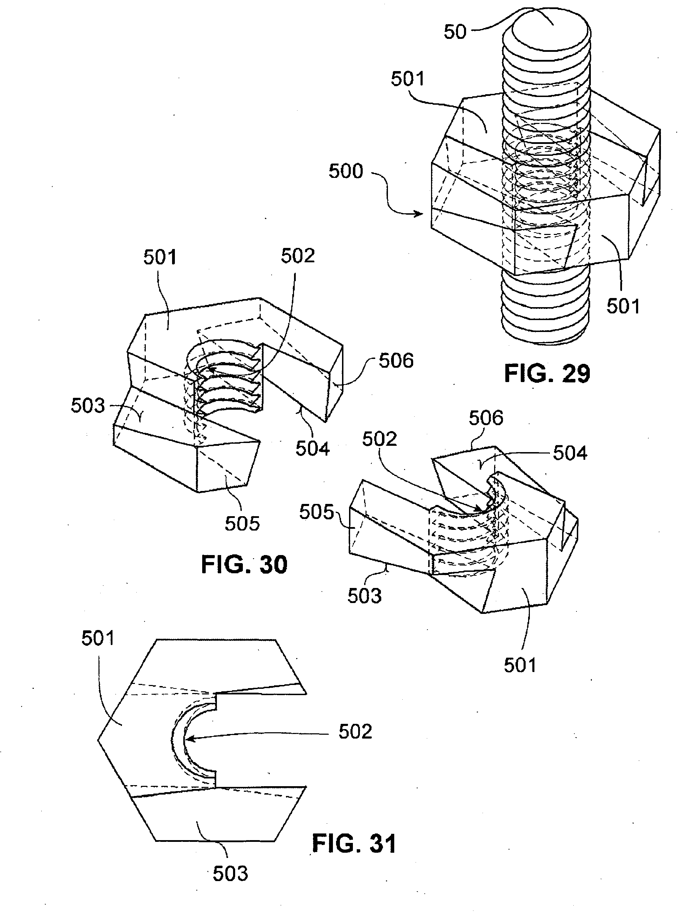

Die Fig. 29 - 31 zeigen eine Ausführungsform der Schraubenmutter 500, welche der Ausführungsform aus den Fig. 23 - 28 sehr ähnlich ist. Die Mutternteile 501 der Schraubenmutter entsprechend im wesentlichen den Mutternteilen 401 der Schraubenmutter 400, bis auf die Spitze 407 und die Schrägfläche 409 zur Verdrehsicherung und bis auf die Bohrung 410 zur Aufnahme eines Stiftes eines Werkzeugs. Ein weiterer Unterschied liegt darin, daß die Schraubenmutter 500 sechseckig ausgebildet ist. Die sechseckige Form wurde durch symmetrisches Abschneiden der Ecken der viereckigen Schraubenmutter 400 aus den Fig. 23 - 28 erreicht, wobei die neue Schraubenmutter 500 einen Eckenwinkel von 60° aufweist. Es ist zu erkennen, daß die Führungsflächen 503 und 504 schraubenartig um eine Achse gewunden sind, die rechtwinklig zur Teilungsebene der Innengewindeabschnitte 502 verläuft.

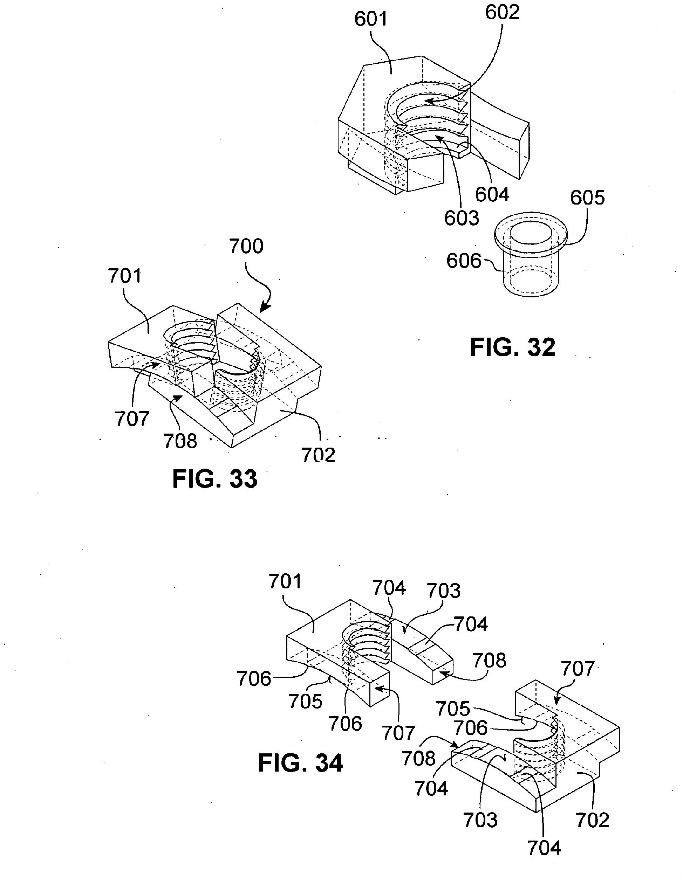

Die Figur 32 zeigt ein Mutternteil 601 einer Ausführungsform der erfindungsgemäßen Schraubenmutter, welches die gleiche Kontur wie das Mutternteil 501 aber konvex und konkav gewölbte Führungsflächen aufweist. Das Mutternteile 501 weist im Bereich des unteren Endes des Innengewindes 602 eine Nut 603 auf, deren untere Wandung eine sich zur Achse des Innengewindes hin erstreckende Schulter 604 bildet. In diese halbe Ringnut 603 kann eine Hälfte eines ringförmigen Kragens 605 eines hutförmigen Rohrstutzens 606 eingefügt werden. Die zweite Hälfte des Kragens 605 kann in eine entsprechende Nut des komplementären Mutternteils (nicht dargestellt) eingefügt werden. Die Schulter 604 drückt den Kragen 605 des Rohrstutzens 606 gegen die Stirnwand eines Außengewindes (nicht dargestellt), auf welches das Innengewinde des Mutternteils 601 aufgeschraubt wird. Eine aus zwei Mutternteilen 601 bestehende Schraubenmutter kann so als Überwurfmutter verwendet werden. Dabei kann die Nut von einer runden Form abweichen und einen komplementär geformten Kragen drehfest und formschlüssig aufnehmen.

Die Figuren 33 und 34 zeigen eine Schraubenmutter 700 mit Halteelementen, welche die zwei Mutternteile 701 und 702 in teilweise zusammengeschobener Stellung (vgl. Fig. 33) aneinander fixieren. Die Mutternteile 701, 702 weisen jeweils einen Verriegelungsarm 707 mit konkav gewölbter Führungsfläche 705 und einen Verriegelungsarm 708 mit konvex gewölbter Führungsfläche 703 auf. Die konvex gewölbten Führungsflächen 703 weisen zwei sich quer zur Länge der Verriegelungsarme 708 erstreckende Vertiefungen 704 auf. Die Vertiefungen 704 sind nur wenige µm tief und gerundet. Sie befinden sich jeweils etwa in einem Abstand von einem Ende der Führungsfläche 703, der einem Drittel der Länge der Führungsfläche 703 entspricht.

Die den konvexen Führungsflächen 703 gegenüberliegenden, konkav gewölbten Führungsflächen 705 weisen dagegen an der gleichen Stelle Vorsprünge 706 auf. Die Vorsprünge 706 sind als quer zur Führungsfläche 705 verlaufende flache Wülste mit einer Höhe von wenigen µm ausgebildet.

Wenn die Mutternteile 701 und 702 vollständig ineinander geschoben sind und ein Innengewinde mit geringem Spiel umgreifen, ragen die Vorsprünge 705 in die Vertiefungen 704 und arretieren so die beiden Mutternteile miteinander. Wenn die Mutternteile 701, 702 aus dieser Stellung zueinander verschoben werden, so daß Verriegelungsarme 707, 708 einander nur etwa zur Hälfte überdecken, ragt nur ein Vorsprung 706 an einer konkaven Führungsfläche 705 in eine Vertiefung 704 der gegenüberliegenden konvexen Führungsfläche 703. Wenn sie ineinander ragen, bilden die Vertiefungen 704 und die Vorsprünge 706 Halteelemente, welche die Mutternteile 701,702 aneinander fixieren. Dies ist in der vollständig zusammengeschobenen Stellung und in der in Fig. 33 erkennbaren, teilweise zusammengeschobenen Stellung der Fall. Die Fixierung oder Arretierung hat den Vorteil, daß die Mutternteile 701, 702 in teilweise zusammengeschobenen Stellung ausgeliefert werden können, ohne daß die Gefahr besteht, daß sie sich voneinander lösen. In der geschlossenen Stellung bewirken die Halteelemente 704, 706 ebenfalls eine zusätzliche Haltekraft. Aufgrund der geringen Höhe der Vertiefungen 704 und der Vorsprünge 706 lassen sich die Mutternteile 701, 702 von Hand gegeneinander verschieben, ohne daß die Verschiebung durch die Vertiefungen 704 und die Vorsprünge 706 behindert wird. Diese können durch eine elastische Verformung der vorzugsweise aus Metall bestehenden Verriegelungsarme 707, 708 ausweichen.

### Bezugszeichenliste:

- 50: Außengewinde
- 100: Schraubenmutter
- 101: erstes Mutternteil
- 102: zweites Mutternteil
- 103: Innengewindeabschnitt
- 104: Innengewindeabschnitt
- 105: Anschlagfläche
- 106: Anschlagfläche
- 107: Anschlagfläche
- 108: Anschlagfläche
- 109: Verriegelungsarm
- 110: Verriegelungsarm
- 111: Verriegelungsarm
- 112: Verriegelungsarm
- 113: radiale Führungsfläche
- 114: radiale Führungsfläche
- 115: radiale Führungsfläche
- 116: radiale Führungsfläche
- 117: schräge Führungsfläche
- 118: schräge Führungsfläche
- 119: schräge Führungsfläche
- 120: schräge Führungsfläche
- 121: Aufnahmenut
- 122: Aufnahmenut
- 123: radiale Führungsfläche
- 124: radiale Führungsfläche
- 125: schräge Führungsfläche
- 126: schräge Führungsfläche
- 127: Aufnahmeabschnitt
- 128: Aufnahmeabschnitt
- 129: radiale Führungsfläche
- 130: radiale Führungsfläche
- 131: schräge Führungsfläche
- 132: schräge Führungsfläche
- 133: achsparallele Führungsfläche
- 134: achsparallele Führungsfläche
- 135: achsparallele Führungsfläche
- 136: achsparallele Führungsfläche
- 137: achsparallele Führungsfläche
- 138: achsparallele Führungsfläche
- 139: achsparallele Führungsfläche
- 140: achsparallele Führungsfläche
- 141: Oberseite, Anlagefläche
- 142: Unterseite, Ablagefläche

- 200: Schraubenmutter
- 201: erstes Mutternteil
- 202: zweites Mutternteil
- 203: Innengewindeabschnitt
- 204: Innengewindeabschnitt
- 205: Verriegelungsarm
- 206: Verriegelungsarm
- 207: Verriegelungsarm
- 208: Verriegelungsarm
- 209: gewölbte Führungsfläche
- 210: gewölbte Führungsfläche
- 211: gewölbte Führungsfläche
- 212: gewölbte Führungsfläche
- 213: achsparallele Führungsfläche
- 214: achsparallele Führungsfläche
- 215: achsparallele Führungsfläche
- 216: achsparallele Führungsfläche
- 217: Oberseite, Anlagefläche
- 218: Unterseite, Anlagefläche
- 219: Schrägflächen
- 220: Schrägflächen
- 221: Stützfläche

- 300: Schraubenmutter
- 301: Mutternteil
- 302: Innengewindeabschnitt
- 303: schräge Führungsfläche
- 304: schräge Führungsfläche
- 305: Verriegelungsarm
- 306: Verriegelungsarm
- 307: Stirnfläche
- 308: Kante
- 309: vertikale Führungsfläche
- 310: vertikale Führungsfläche
- 311: Vorsprung
- 312: Oberseite
- 313: Unterseite
- 314: Bohrung
- 315: vertikale Führungsfläche
- 316: Endbereich des Innengewindeabschnitts

- 400: Schraubenmutter
- 401: Mutternteil
- 402: Innengewindeabschnitt
- 403: gewundene Führungsfläche
- 404: gewundene Führungsfläche
- 405: Verriegelungsarm
- 406: Verriegelungsarm
- 407: Spitze
- 408: Anschlagfläche
- 409: Schrägfläche
- 410: Bohrung

- 500: Schraubenmutter
- 501: Mutternteil
- 502: Innengewindeabschnitt
- 503: gewundene Führungsfläche
- 504: gewundene Führungsfläche
- 505: Verriegelungsarm
- 506: Verriegelungsarm

- 601: erstes Mutternteil
- 602: Innengewinde
- 603: Ringnut
- 604: Schulter
- 605: Kragen
- 606: Rohrstutzen

- 700: Schraubenmutter
- 701: Mutternteil
- 702: Mutternteil
- 703: konvexe Führungsfläche
- 704: Halteelement, Vertiefung
- 705: konkave Führungsfläche
- 706: Halteelement, Vorsprung
- 707: Verriegelungsarm
- 708: Verriegelungsarm

## Patentansprüche

1. Schraubenmutter (100, 200, 300, 400, 500,700) mit einem Innengewinde und mindestens zwei Teilen (101,102; 201,202; 301, 401, 501,701,702), wobei jedes der Teile (101,102; 201,202; 301, 401, 501,701,702) einen Abschnitt (103, 104, 203, 204, 302, 402, 502) des Innengewindes aufweist, der in radialer Richtung auf ein Außengewinde (50) aufschiebbar ist, und wobei die Teile (101,102; 201,202; 301, 401, 501, 701,702) miteinander zusammenwirkende Verbindungselemente aufweisen, welche eine relative Verschiebung der Teile (101,102; 201,202; 301, 401, 501, 701,702) in einer radial zur Achse des Innengewindes verlaufenden Richtung bis in eine Verwendungsposition ermöglichen, in der das Innengewinde der Schraubenmutter (100, 200, 300, 400, 500,700) das Außengewinde (50) mit geringem Spiel umgreift,
wobei die Verbindungselemente Führungsflächen aufweisen, die um einen Winkel zur radial zur Achse des Innengewindes verlaufenden Ebene geneigt sind und die die Teile (101,102; 201,202; 301, 401, 501, 701,702) der Schraubenmutter (100, 200, 300, 400, 500,700) beim Verschieben in die Verwendungsposition in einer Rotationsbewegung um eine quer zur Achse des Innengewindes verlaufende Rotationsachse führen,
**dadurch gekennzeichnet, daß** mindestens ein Teil (101,102; 201,202; 301, 401, 501, 701,702) mindestens einen Verriegelungsarm aufweist, der nur auf einer Seite eine Führungsfläche aufweist, welche die Rotationsbewegung beim Verschieben der Teile bewirkt und gegen eine komplementäre Führungsfläche (117, 118, 119, 120, 125, 126, 131, 132, 209, 210, 211, 212, 303, 304, 403, 404, 503, 504,703,705) des anderen Teils anliegt.

2. Schraubenmutter (200,300,400,500) nach Anspruch 1, **dadurch gekennzeichnet, daß** die Innengewindeabschnitte (203, 204, 302, 402, 502) der zwei Teile (201, 202; 301, 401, 501) entlang einer sich in Richtung der Gewindeachse erstreckenden Teilungsebene getrennt sind und daß jedes Teil (201, 202; 301, 401, 501) der Schraubenmutter (200,300,400,500) zwei Führungsflächen (209, 210; 211, 212; 303, 304; 403, 404; 503, 504) aufweist, die zu beiden Seite einer rechtwinklig zur Teilungsebene verlaufenden Mittelebene angeordnet sind, wobei die zwei Führungsflächen (209, 210; 211, 212; 303, 304; 403, 404; 503, 504) in entgegengesetzte Richtungen in bezug auf die Gewindeachse orientiert sind.

3. Schraubenmutter (100) nach Anspruch 1, **dadurch gekennzeichnet, daß** die Innengewindeabschnitte (103, 104) der zwei Teile (101,102) entlang einer sich in Richtung der Gewindeachse erstreckenden Teilungsebene getrennt sind und daß jedes Teil (101,102) der Schraubenmutter (100) auf beiden Seiten der Teilungsebene zwei Führungsflächen (117, 118, 131, 132; 119, 120, 125, 126) aufweist, wobei die Führungsflächen auf den zwei Seiten der Teilungsebene (117, 118, 131, 132; 119, 120, 125, 126) in entgegengesetzte Richtungen in bezug auf die Gewindeachse orientiert sind und in entgegengesetzte Richtungen zur radialen Ebene des Gewindes geneigt sind.

4. Schraubenmutter (200) nach einem der vorangehenden Ansprüche, **dadurch gekennzeichnet, daß** die Führungsflächen (209,210, 211,212) gewölbt sind.

5. Schraubenmutter (200) nach Anspruch 4, **dadurch gekennzeichnet, daß** die Führungsflächen (209,210, 211,212) die Form eines Zylindermantelabschnitts aufweisen.

6. Schraubenmutter (200) nach Anspruch 5, **dadurch gekennzeichnet, daß** die Achse des Innengewindes mit einem Radius des Zylinders, auf dessen Mantelfläche die Führungsflächen (209,210, 211,212) verlaufen, zusammenfällt.

7. Schraubenmutter (400) nach Anspruch 2, **dadurch gekennzeichnet, daß** die Führungsflächen (403,404) entlang einer gewundenen Fläche verlaufen.

8. Schraubenmutter (400) nach Anspruch 7, **dadurch gekennzeichnet, daß** die gewundenen Fläche der Führungsflächen (403,404) um eine Achse gewunden ist, die rechtwinklig zur Teilungsebene der Gewindeabschnitte der Mutter und radial zur Achse des Innengewindes verläuft.

9. Schraubenmutter (100,200,300,400,500) nach einem der vorangehenden Ansprüche, **dadurch gekennzeichnet, daß** die Teile (101,102; 201,202; 301, 401, 501) aus einem elastisch verformbaren Material gefertigt sind.

10. Schraubenmutter (100,200) nach einem der vorangehenden Ansprüche, **dadurch gekennzeichnet, daß** die Teile (101,102; 201,202) zusätzliche, gegeneinander anliegende Führungsflächen (133 - 136, 137 - 140; 213-216) aufweisen, die in einer sich parallel zur Achse des Innengewindes erstreckenden Ebene liegen.

11. Schraubenmutter (100,200) nach Anspruch 10, **dadurch gekennzeichnet, daß** die in einer sich parallel zur Achse des Innengewindes erstreckenden Ebene liegenden Führungsflächen (133 - 136; 137 - 140, 213-216) sich parallel zu der radialen Richtung, in der die Teile (101,102; 201,202) zueinander verschiebbar sind, erstrecken.

12. Schraubenmutter (100,200,300,400,500) nach einem der vorangehenden Ansprüche, **dadurch gekennzeichnet, daß** die Teile (101,102; 201,202; 301, 401, 501) in der Verwendungsposition eine gemeinsame Anlagefläche (141, 142, 217, 218) aufweisen, die beim Festschrauben der Schraubenmutter auf einem Außengewinde gegen eine mit dem Außengewinde verbundene Stützfläche (221) anliegt.

13. Schraubenmutter (200) nach Anspruch 12, **dadurch gekennzeichnet, daß** die Anlagefläche (217,218) jedes Teils (201,202) an einem Rand eine Schrägfläche (219,220) aufweist, welche einen Winkel zur Anlagefläche (217,218) aufweist, der dem Rotationswinkel beim Anordnen des Teils (201,202) in der Verwendungsposition entspricht.

14. Schraubenmutter nach einem der Ansprüche 1 bis 11, **dadurch gekennzeichnet, daß** die Teile in der Verwendungsposition jeweils mindestens einen Anlagepunkt aufweisen, der sich beim Festschrauben der Schraubenmutter auf einem Außengewinde gegen eine mit dem Außengewinde verbundene Stützfläche abstützt.

15. Schraubenmutter nach Anspruch 14, **dadurch gekennzeichnet, daß** der Anlagepunkt mit mindestens zwei weiteren Punkten im Randbereich eines Teils eine Schrägfläche definiert, welche einen Winkel zur Stützfläche aufweist, der dem Rotationswinkel bei der Anordnung des Teils in der Verwendungsposition entspricht.

16. Schraubenmutter nach einem der vorangehenden Ansprüche, **dadurch gekennzeichnet, daß** in mindestens einem Endbereich (316) des Innengewindeabschnitts (302) mindestens eines der Teile die Gewindegänge abgetragen sind.

17. Schraubenmutter (300,400,500) nach einem der vorangehenden Ansprüche, **dadurch gekennzeichnet, daß** sie zwei identische Teile (301,401,501) aufweist.

18. Schraubenmutter (300,400,500) nach einem der vorangehenden Ansprüche, **dadurch gekennzeichnet, daß** in der Verwendungsposition die identischen Teile (301,401,501) zueinander um 180° um eine der folgenden Achsen gedreht ist:
- die Achse des Innengewindes,
- eine sich radial zum Innengewinde und in der Teilungsebene der Innengewindeabschnitte erstreckende Achse.

19. Schraubenmutter (100, 200, 300, 400, 500) nach einem der vorangehenden Ansprüche, **dadurch gekennzeichnet, daß** jedes der Teile (101,102; 201,202; 301, 401, 501) in einem Formpreßvorgang hergestellt ist.

20. Schraubenmutter (700) nach einem der vorangehenden Ansprüche, **dadurch gekennzeichnet, daß** die Teile (701,702) miteinander zusammenwirkende Halteelemente (704,706) umfassen, welche die Teile (701,702) in zumindest teilweise zusammengeschobener Stellung aneinander fixieren.

21. Schraubenmutter nach Anspruch 20, **dadurch gekennzeichnet, daß** die Halteelemente mindestens eine der folgenden zusammenwirkenden Anordnungen umfassen:
- einander anziehende Magnete;
- einen Magnet und ein ferromagnetisches Material;
- Rastvorsprünge und diese aufnehmende Rastausnehmungen,
- Haftflächen mit erhöhter Reibung oder Adhäsion.

22. Schraubenmutter nach einem der vorangehenden Ansprüche, **dadurch gekennzeichnet, daß** im Bereich eines Endes des Innengewindes (602) eine sich zur Achse des Innengewindes (602) hin erstreckende Schulter (604) angeordnet ist.

23. Schraubenmutter nach Anspruch 22, **dadurch gekennzeichnet, daß** die Schulter (604) eine Wandung einer sich an das Innengewinde (602) anschließenden Nut (603) ist.

24. Werkzeug zum Anbringen einer Schraubenmutter nach einem der vorangehenden Ansprüche 1 bis 21, **dadurch gekennzeichnet, daß** es je eine Haltevorrichtung für ein Teil der Schraubenmutter umfaßt, wobei die Haltevorrichtungen über Antriebsmittel miteinander derart gekoppelt sind, daß sie eine Verschiebebewegung zueinander und in einer radial zur Achse des Innengewindes verlaufenden Richtung ausführen und
daß sie zumindest in dem letzten Bewegungsabschnitt, bevor die Teile der Schraubenmutter die Verwendungsposition erreicht haben, eine Rotation um eine quer zur Achse des Innengewindes verlaufende Rotationsachse durchführen.

## Claims

1. A nut (100, 200, 300, 400, 500, 700) having an internal thread and at least two parts (101, 102; 201, 202; 301, 401, 501, 701, 702) each of the parts (101, 102; 201, 202; 301, 401, 501, 701, 702) having a section (103, 104, 203, 204, 302, 402, 502) of the internal thread which is radially pushable onto an external thread (50), the parts (101, 102; 201, 202; 301, 401, 501, 701, 702) having cooperating connecting elements which allow a relative displacement of the parts (101, 102; 201, 202; 301, 401, 501, 701, 702) in a direction running radially to the axis of the internal thread until reaching a use position In which the internal thread of the nut (100, 200, 300, 400, 500, 700) surrounds the external thread (50) with a small clearance, the connecting elements having guide surfaces which are inclined by an angle to the plane running radially to the axis of the internal thread and which guide the parts (101, 102; 201, 202; 301, 401, 501, 701, 702) of the nut (100, 200, 300, 400, 500, 700) in displacement into the use position in a rotational movement about an axis of rotation running across the axis of the internal thread,
**characterized in that** at least one part (101, 102; 201, 202; 301, 401, 501, 701, 702) has at least one locking arm which has on only one side a guide surface, which induces a rotational movement when the parts are displaced and is in contact with a complementary guide surface (117, 118, 119, 120, 125, 126, 131, 132, 209, 210, 211, 212, 303, 304, 403, 404, 503, 504, 703, 705) of the other part.

2. The nut (200, 300, 400, 500) as recited in Claim 1,
**characterized in that** the internal thread sections (203, 204, 302, 402, 502) of the two parts (201, 202; 301, 401, 501) are separated along a parting plane extending in the direction of the thread axis, and each part (201, 202; 301, 401, 501) of the nut (200, 300, 400, 500) has two guide surfaces (209, 210; 211, 212; 303, 304; 403, 404; 503, 504) which are situated on both sides of a central plane at a right angle to the parting plane, the two guide surfaces (209, 210; 211, 212; 303, 304; 403, 404; 503, 504) being oriented in opposite directions with respect to the thread axis.

3. The nut (100) as recited in Claim 1,
**characterized in that** the internal thread sections (103, 104) of the two parts (101, 102) are divided along a parting plane extending in the direction of the thread axis, and each part (101, 102) of the nut (100) has two guide surfaces (117, 118, 131, 132; 119, 120, 125, 126) on both sides of the parting plane, the guide surfaces on the two sides of the parting plane (117, 118, 131, 132; 119, 120, 125, 126) being oriented in opposite directions with respect to the thread axis and being inclined in opposite directions to the radial plane of the thread.

4. The nut (200) as recited in one of the preceding claims,
**characterized in that** the guide surfaces (209, 210, 211, 212) are curved.

5. The nut (200) as recited in Claim 4,
**characterized in that** the guide surfaces (209, 210, 211, 212) have the form of a lateral cylindrical section.

6. The nut (200) as recited in Claim 5,
**characterized In that** the axis of the internal thread coincides with a radius of the cylinder on whose lateral surface the guide surfaces (209, 210, 211, 212) run.

7. The nut (400) as recited In Claim 2,
**characterized In that** the guide surfaces (403, 404) run along a helical surface.

8. The nut (400) as recited in Claim 7,
**characterized in that** the helical surface of the guide surfaces (403, 404) is wound around an axis running at a right angle to the parting plane of the thread sections of the nut and radially to the axis of the internal thread.

9. The nut (100, 200, 300, 400, 500) as recited in one of the preceding claims,
**characterized in that** the parts (101, 102; 201, 202; 301, 401, 501) are made of an elastically deformable material.

10. The nut (100, 200) as recited In one of the preceding claims,
**characterized in that** the parts (101, 102; 201, 202) have additional guide surfaces (133 through 136, 137 through 140; 213 through 216) that are in contact with one another and are situated In a plane extending parallel to the axis of the internal thread.

11. The nut (100, 200) as recited in Claim 10,
**characterized in that** the guide surfaces (133 through 136, 137 through 140; 213 through 216) situated in a plane extending parallel to the axis of the internal thread extend parallel to the radial direction in which the parts (101, 102; 201, 202) are displaceable relative to one another.

12. The nut (100, 200, 300, 400, 500) as recited in one of the preceding claims,
**characterized in that** the parts (101, 102; 201, 202; 301, 401, 501) in the use position have a shared contact surface (141, 142, 217, 218), which is in contact with a supporting surface (221) connected to an external thread when the nut is tightened into the external thread.

13. The nut (200) as recited in Claim 12,
**characterized in that** the contact surface (217, 218) of each part (201, 202) has on one edge an inclined surface (219, 220), which forms an angle to the contact surface (217, 218) corresponding to the angle of rotation when the part (201, 202) is placed In the use position.

14. The nut as recited In one of Claims 1 through 11,
**characterized in that** the parts in the use position each have at least one contact point which is supported against a supporting surface connected to an external thread when the nut is tightened onto the external thread.

15. The nut as recited in Claim 14,
**characterized In that** the contact point defines, together with at least two additional points in the edge area of a part, an inclined surface which forms an angle with the supporting surface corresponding to the angle of rotation when the part is placed in the use position.

16. The nut as recited in one of the preceding claims,
**characterized in that** the thread flights are partially removed in at least one end area (316) of the internal thread section (302) of at least one of the parts.

17. The nut (300, 400, 500) as recited In one of the preceding claims, **characterized in that** it has two identical parts (301, 401, 501).

18. The nut (300, 400, 500) as recited in one of the preceding claims, **characterized In that** in the use position the identical parts (301, 401, 501) are rotated by 180° relative to one another about one of the following axes:
- the axis of the internal thread,
- an axis extending radially to the internal thread and in the parting plane of the inside thread sections.

19. The nut (100, 200, 300, 400, 500) as recited in one of the preceding claims,
**characterized in that** each of the parts (101, 102; 201, 202; 301, 401, 501) is manufactured in a compression molding operation.

20. The nut (700) as recited In one of the preceding claims, **characterized In that** the parts (701, 702) include cooperating retaining elements (704, 706) which secure the parts (701, 702) in an at least partially assembled position.

21. The nut as recited in Claim 20,
**characterized in that** the retaining elements include at least one of the following cooperating devices:
- mutually attracting magnets;
- a magnet and a ferromagnetic material;
- catch projections and catch recesses receiving the former;
- adhesive surfaces having elevated friction or adhesion.

22. The nut as recited in one of the preceding claims,
**characterized In that** a shoulder (604) extending toward the axis of the internal thread (602) is situated in the area of one end of the internal thread (602).

23. The nut as recited in Claim 22,
**characterized In that** the shoulder (604) Is a wall of a groove (603) adjacent to the internal thread (602).

24. The tool for applying a nut as recited in one of the preceding Claims 1 through 21.
**characterized in that** it includes one retaining device for each part of the nut, the retaining devices being linked together by driving means, so that they execute a displacement movement relative to one another and in a direction running radially to the axis of the internal thread,
and they execute a rotation about an axis of rotation running across the axis of the internal thread at least in the last movement segment before the nut parts have reached the use position.

## Revendications

1. Ecrou (100, 200, 300, 400, 500, 700) comprenant un filetage interne et au moins deux parties (101, 102 ; 201, 202 ; 301, 401, 501, 701, 702), chacune des parties (101, 102 ; 201, 202 ; 301, 401, 501, 701, 702) présentant un tronçon (103, 104, 203, 204, 302, 402, 502) du filetage interne, qui peut être introduit dans le sens radial sur un filetage externe (50), et les parties (101, 102 ; 201, 202 ; 301, 401, 501, 701, 702) présentant des éléments de liaison coopérant les uns avec les autres, lesquels permettent un déplacement relatif des pièces (101, 102; 201, 202 ; 301, 401, 501, 701, 702) dans une direction agencée radialement à l'axe du filetage interne jusque dans une position d'utilisation, dans laquelle le filetage interne de l'écrou (100, 200, 300, 400, 500, 700) entoure le filetage externe (50) avec un faible Jeu, les éléments de liaison présentant des surfaces de guidage, qui sont inclinées d'un angle par rapport au plan agencé radialement à l'axe du filetage interne et qui guident les parties (101, 102 ; 201. 202 ; 301, 401, 501, 701, 702) de l'écrou (100, 200, 300, 400, 500, 700) lors du déplacement dans la position d'utilisation dans un mouvement de rotation autour d'un axe de rotation agencé transversalement à l'axe du filetage interne,
**caractérisé en ce qu'**au moins une partie (101, 102 ; 201, 202 ; 301, 401, 501, 701, 702) présente au moins un bras de verrouillage, qui présente uniquement sur un côté une surface de guidage, qui entraîne la mouvement de rotation lors du déplacement des pièces et s'applique contre une surface de guidage complémentaire (117, 118, 119, 120, 125, 126, 131, 132, 209, 210, 211, 212, 303, 304, 403, 404, 503, 504, 703, 705) de l'autre partie.

2. Ecrou (200, 300, 400, 500) selon la revendication 1, **caractérisé en ce que** les parties de filetage interne (203, 204, 302, 402, 502) des deux parties (201, 202 ; 301, 401, 501) sont séparées le long d'un plan de séparation s'étendant en direction de l'axe de filetage et **en ce que** chaque partie (201, 202 ; 301, 401, 501) de l'écrou (200, 300, 400, 500) présente deux surfaces de guidage (209, 210 ; 211, 212 ; 303, 304 ; 403, 404 ; 503, 504), qui sont disposées des deux côtés d'un plan médian agencé perpendiculairement au plan de séparation, les deux surfaces de guidage (209, 210 ; 211, 212 ; 303, 304 ; 403, 404 ; 503, 504) étant orientées dans des directions opposées par rapport à l'axe de filetage.

3. Ecrou (100) selon la revendication 1, **caractérisé en ce que** les parties de filetage interne (103, 104) des deux parties (101, 102) sont séparées le long d'un plan de séparation s'étendant en direction de l'axe de filetage et **en ce que** chaque partie (101, 102) de l'écrou (100) présente sur les deux côtés du plan de séparation deux surfaces de guidage (117, 118, 131, 132 ; 119, 120, 125, 126), les surfaces de guidage étant orientées sur les deux côtés du plan de séparation (117, 118, 131, 132 ; 119, 120, 125, 126) dans des directions opposées par rapport à l'axe de filetage et étant inclinées dans des directions opposées par rapport au plan radial du filetage.

4. Ecrou (200) selon l'une des revendications précédentes, **caractérisé en ce que** les surfaces de guidage (209, 210, 211, 212) sont Incurvées.

5. Ecrou (200) selon la revendication 4, **caractérisé en ce que** les surfaces de guidage (209, 210, 211, 212) présentent la forme d'une partie d'enveloppe cylindrique.

6. Ecrou (200) selon la revendication 5, **caractérisé en ce que** l'axe du filetage interne coïncide avec un rayon du cylindre, sur la surface d'enveloppe duquel les surfaces de guidage (209, 210, 211, 212) sont agencées.

7. Ecrou (400) selon la revendication 2, **caractérisé en ce que** les surfaces de guidage (403, 404) sont agencées le long d'une surface sinueuse.

8. Ecrou (400) selon la revendication 7, **caractérisé en ce que** la surface sinueuse des surfaces de guidage (403, 404) est tournée autour d'un axe, qui est agencé perpendiculairement au plan de séparation des parties de filetage de l'écrou et est agencé radialement à l'axe du filetage interne.

9. Ecrou (100, 200, 300, 400, 500) selon l'une des revendications précédentes, **caractérisé en ce que** les parties (101, 102 ; 201, 202 ; 301, 401, 501) sont fabriquées dans un matériau pouvant être déformé élastiquement.

10. Ecrou (100, 200) selon l'une des revendications précédentes, **caractérisé en ce que** les parties (101, 102 ; 201, 202) présentent des surfaces de guidage (133-136, 137-140; 213-216) supplémentaires, s'appliquant les unes contre les autres, qui sont disposées dans un plan s'étendant parallèlement à l'axe du filetage interne.

11. Ecrou (100, 200) selon la revendication 10, **caractérisé en ce que** les surfaces de guidage (133-136 ; 137-140 ; 213-216) disposées dans un plan s'étendant parallèlement à l'axe du filetage interne s'étendent parallèlement à la direction radiale, dans laquelle les parties (101, 102 ; 201, 202) peuvent coulisser les unes par rapport aux autres.

12. Ecrou (100, 200, 300, 400, 500) selon l'une des revendications précédentes, **caractérisé en ce que** les parties (101, 102 ; 201, 202 ; 301, 401, 501) présentent dans la position d'utilisation une surface d'application (141, 142, 217, 218) commune, qui, lors du vissage de l'écrou sur un filetage externe, s'applique contre une surface de soutien (221) reliée au filetage externe.

13. Ecrou (200) selon la revendication 12, **caractérisé en ce que** la surface d'application (217, 218) de chaque partie (201, 202) présente sur un bord une surface inclinée (219, 220), qui présente un angle par rapport à la surface d'application (217, 218), qui correspond à l'angle de rotation lors de la mise en place de la partie (201, 202) dans la position d'utilisation.

14. Ecrou selon l'une des revendications 1 à 11, **caractérisé en ce que** les parties présentent dans la position d'utilisation à chaque fois au moins un point d'application, qui, lors du vissage de l'écrou sur un filetage externe, s'appuie contre une surface de soutien reliée au filetage externe.

15. Ecrou selon la revendication 14, **caractérisé en ce que** le point d'application définit avec au moins deux autres points dans la zone de bordure d'une partie une surface inclinée, qui présente un angle par rapport à la surface de soutien, qui correspond à l'angle de rotation lors de la mise en place de la partie dans la position d'utilisation.

16. Ecrou selon l'une des revendications précédentes, **caractérisé en ce que** les pas de filetage sont érodés dans au moins une zone d'extrémité (316) de la partie de filetage interne (302) d'au moins l'une des parties.

17. Ecrou (300, 400, 500) selon l'une des revendications précédentes, **caractérisé en ce qu'**il présente deux parties (301, 401, 501) identiques.

18. Ecrou (300, 400, 500) selon l'une des revendications précédentes, **caractérisé en ce que**, dans la position d'utilisation, les parties identiques (301, 401, 501) sont tournées l'une par rapport à l'autre de 180° autour de l'un des axes suivants :
- l'axe du filetage interne,
- un axe s'étendant radialement au filetage interne et dans le plan de partage des tronçons de filetage interne.

19. Ecrou (100, 200, 300, 400, 500) selon l'une des revendications précédentes, **caractérisé en ce que** chacune des parties (101, 102 ; 201, 202 ; 301, 401, 501) est fabriquée dans un processus de moulage par compression.

20. Ecrou (700) selon l'une des revendications précédentes, **caractérisé en ce que** les parties (701, 702) comprennent des éléments de retenue (704, 706) coopérant les uns avec les autres, lesquels fixent les parties (701, 702) dans une position au moins partiellement regroupée.

21. Ecrou selon la revendication 20, **caractérisé en ce que** les éléments de retenue comprennent au moins l'un des agencements coopérants suivants :
- aimants s'attirant mutuellement;
- un aimant et un matériau ferromagnétique ;
- saillies d'encliquetage et évidements d'encliquetage recevant ces saillies,
- surfaces d'adhérence avec frottement élevé ou adhésion élevée.

22. Ecrou selon l'une des revendications précédentes, **caractérisé en ce qu'**un épaulement (604) s'étendant en direction de l'axe du filetage interne (602) est disposé dans la zone d'une extrémité du filetage interne (602).

23. Ecrou selon la revendication 22, **caractérisé en ce que** l'épaulement (604) est une paroi d'une rainure (603) se raccordant au filetage interne (602).

24. Outil pour mettre en place un écrou selon l'une des revendications précédentes 1 à 21, **caractérisé en ce qu'**il comprend à chaque fois un dispositif de retenue pour une partie de l'écrou, les dispositifs de retenue étant couplés les uns avec les autres par des moyens d'entraînement, de telle sorte qu'ils exécutent un mouvement de déplacement les uns par rapport aux autres et dans une direction agencée radialement à l'axe du filetage interne et
**en ce qu'**ils exécutent une rotation autour d'un axe de rotation agencé transversalement à l'axe du filetage interne tout du moins dans la dernière partie de déplacement, avant que les parties de l'écrou aient atteint la position d'utilisation.
